# EUROPEAN PATENT SPECIFICATION

(11) **EP 3 884 611 B1**
(45) Date of publication and mention of the grant of the patent: **14.10.2026**
(21) Application number: 19809632.3
(22) Date of filing: 19.11.2019
(51) Int. Cl.: H04L 9/00, H04L 9/32

(54) **METHOD AND SYSTEM FOR PROVIDING A TAMPER PROOF RECORD CHAIN**
VERFAHREN UND SYSTEM ZUR BEREITSTELLUNG EINER MANIPULATIONSSICHEREN AUFZEICHNUNGSKETTE
PROCÉDÉ ET SYSTÈME DE FOURNITURE D'UNE CHAÎNE D'ENREGISTREMENTS INVIOLABLE

(30) Priority: 19.11.2018 ZA 201807754
(43) Date of publication of application: 29.09.2021
(73) Proprietor: Capitec Bank Limited, Stellenbosch 7600, Western Cape (ZA)
(72) Inventor: STEYN, Louis Johannes, 7600 Stellenbosch (ZA); DE WET, Riaan, 7600 Stellenbosch (ZA); CLAUSEN, Zsa-Jacques, 7600 Stellenbosch (ZA); SMITH, Arno, 7600 Stellenbosch (ZA)
(74) Representative: Mewburn Ellis LLP
(86) International application number: PCT/IB2019/059924
(87) International publication number: WO 2020/104935

(56) References cited:
- EP-A2- 2 897 051
- US-A- 5 956 404
- US-A- 5 978 475
- US-A1- 2005 004 899

## Description

### FIELD OF THE INVENTION

This disclosure relates to electronic transactions and electronic agreements. More particularly, however not exclusively, the disclosure relates to methods and systems that facilitate the provision of a secure, tamper proof record chain of data relating to such transactions and agreements.

### BACKGROUND TO THE INVENTION

The corporate world is increasingly striving towards paperless environments and the reasons for this are legion. Not only does it lessen the environmental impact of paper usage, but it relieves companies of the burdens of paper storage and backup. Paper is a heavy medium and secure backup requires both space and protection from fire damage, which makes it a costly expense. Paperless companies also save on printing, binding and courier expenses associated with the delivery of hard copies.

However, paperless environments also present a number of new challenges.

For example, where electronic agreements and transactions are involved, as opposed to their paper counterparts, the burden of proving the authenticity and integrity of an electronic agreement, and that the parties had indeed assented to the terms of the agreement may be difficult. A party that repudiates an electronic agreement may claim that the document had been altered after they had signed the agreement, or may claim not to have been a signatory altogether.

Some transactions may furthermore require certain steps to be executed in a particular sequence. For example, in South Africa, legislation requires certain conditions in an agreement to be pointed out to a consumer before the consumer accedes to the terms of the relevant agreement. If these conditions are only pointed out to the consumer after he or she has so acceded the agreement may be invalidated *in toto.* By way of further example, in South Africa, credit providers are required to perform an affordability assessment before entering into a credit agreement with a consumer to combat reckless lending practices. Likewise, failure to do so may prevent the credit provider from enforcing the credit agreement against the consumer at a later stage.

When electronic documents and agreements are to be relied on as evidence in a dispute, these electronic records must be reliable enough for a court or other adjudicating forum to assign sufficient evidentiary weight to the relevant records. Therefore, a secure audit trail proving the origin and integrity of such electronic records is of utmost importance. Known methods of processing electronic records for an audit are described in EP2897051A1, US2005004899A1, US5956404A, and US5978475A.

The applicant considers there to be scope for improvement in this regard.

The preceding discussion of the background to the invention is intended only to facilitate an understanding of the present disclosure and any invention disclosed therein. It should be appreciated that the discussion is not an acknowledgment or admission that any of the material referred to was part of the common general knowledge in the art as at the priority date of the application.

### SUMMARY OF THE INVENTION

Aspects of the invention are set out in the appended independent claims. Optional features of the invention are set out in the appended dependent claims.

In accordance with an aspect of the disclosure there is provided a computer-implemented method for creating a tamper proof record chain of a transaction comprising a number of transaction milestones, the method being executed at a remote server and comprising the steps of:
for each transaction milestone:
creating a record entry including:
   receiving a data message associated with the milestone that includes at least part of a term of the transaction or an identifier of a party to the transaction,
   receiving a timestamp associated with the milestone,
   obtaining a value that provides a link to an immediately preceding and/or following record entry, if any, and
   writing the data message, timestamp and link value to the record entry; and
writing the record entry to a tamper proof storage configured to disable modification of the record entry after completion of the write operation,
wherein a series of data messages of the linked record entries in the tamper proof storage includes at least an identifier of each party to the transaction and represents the record chain for the transaction.

Further features provide for the method to be a computer-implemented method for creating an audit trail of a transaction comprising a number of transaction milestones, the method being executed at a remote server and comprising the steps of:
for each transaction milestone:
creating an audit entry including:
   receiving a data message associated with the milestone that includes at least part of a term of the transaction or an identifier of a party to the transaction,
   receiving a timestamp associated with the milestone,
   obtaining a value that provides a link to an immediately preceding and/or following record entry, if any, and
   writing the data message, timestamp and link value to the audit entry; and
writing the audit entry to a tamper proof storage configured to disable modification of the audit entry after completion of the write operation,
wherein a series of data messages of the linked record entries in the tamper proof storage includes at least an identifier of each party to the transaction and represents the audit trail for the transaction.

A further feature provides for the value providing a link to the immediately preceding and/or following record entry to be formed by a cryptographic hash value of the preceding or following record entry.

Further features provide for at least one of the data messages associated with a milestone to include data associated with a document that is associated with the transaction; and for at least one of the transaction milestones to represent the creation of an unsigned document associated with the transaction, the unsigned document including at least an identifier of each party to the transaction.

Still further features provide for the method to include the steps of using the identifiers of the parties to the transaction to obtain an electronic signature for each party; for the data associated with the document to be an identifier of the unsigned document and for the method to include the step of retrieving the unsigned document using the document identifier and applying the electronic signatures of the parties to the unsigned document; and for at least one of the milestones to represent the applying of the electronic signatures to the unsigned document.

Further features provide for the electronic signature of each party to include the timestamp associated with the milestone at which the identifier of the party was received; for the identifier of at least one of the parties to the transaction to be derived from a biometric of the respective party; for the biometric to be minutiae derived from at least one fingerprint of the party; and for the electronic signature to include an image of a biometric of the party, such as at least one fingerprint.

Still further features provide for the applying of the electronic signature of a party to be preceded by and subject to the successful biometric authentication of the party; and for the timestamp included in the signature to correspond to a time at which the biometrics of the party was successfully authenticated, the timestamp having been received in the data message subsequent to the authentication.

Further features provide for the step of writing the record entry to the tamper proof storage to be preceded by writing the record entry to temporary storage and causing the record entry to be written to the tamper proof storage in response to the occurrence of a future event; and for the future event to be selected from the group comprising: the completion of the record chain, elapse of a specified period of non-activity on the record chain after the creation of a latest record entry and an accumulation of a predetermined number of record entries in the temporary storage.

Further features provide for the temporary storage to be an online storage; and for the record entries to remain in the online storage after being written to the tamper proof storage, the record entries in the online storage being usable as an index to the record entries in the tamper proof storage, alternatively for an index to the record entries written to the tamper proof storage to remain in the online storage after the record entries are written to the tamper proof storage.

Still further features provide for the timestamp received at each milestone to be provided by a trusted third party; for the timestamp to include a data hash derived from the data message associated with the relevant milestone; for the timestamp to include a timestamp hash derived from the combination of the timestamp and data hash; and for either or both of the timestamp and timestamp hash to be digitally signed with an encryption key associated with the trusted third party.

In accordance with a further aspect of the disclosure there is provided a system for creating a tamper proof record chain of a transaction comprising a number of transaction milestones, the system including a memory for storing computer-readable program code and a processor for executing the computer-readable program code, the system including a remote server comprising:
a data message receiving component for receiving a data message associated with a milestone that includes at least part of a term of the transaction or an identifier of a party to the transaction;
a timestamp receiving component for receiving a timestamp associated with the relevant milestone,
a link value obtaining component for obtaining a value that provides a link to an immediately preceding and/or following record entry,
a record entry creating component for creating a record entry and for writing the data message, timestamp and link value to the record entry, and
a record entry writing component for writing the record entry to a tamper proof storage configured to disable modification of the record entry after completion of the write operation, wherein a series of data messages of the linked record entries in the tamper proof storage includes at least an identifier of each party to the transaction and represents the record chain for the transaction.

A further feature provides for the link value obtaining component to be included in a cryptography component and for the link obtaining component to be arranged to form a link to the immediately preceding and/or following record entry with a cryptographic hash of the preceding or following record entry, the cryptographic hash being obtained by the cryptography component.

A further feature provides for the remote server to include a tamper proof storage access component for causing a record entry to be written to the tamper proof storage, and causing a record entry to be read from the tamper proof storage.

Further features provide for the remote server to include a document generation component for generating a document associated with the transaction; and an electronic document management component for retrieving an unsigned document created by the document generation component using an identifier of the document included in a data message received by the data message receiving component.

Further features provide for the remote server to include a biometrics component for obtaining biometric data of a party and deriving the identifier of the party from the biometric data of the party; and an electronic signature (eSignature) component for obtaining an electronic signature for each party using the identifiers of the parties; and for the eSignature component to be arranged to apply the electronic signatures to the unsigned document.

A further feature provides for the timestamp obtaining component to be included in a trusted timestamp authority (TSA) access component, the TSA access component being adapted to request and receive timestamps from a trusted timestamp authority (TSA).

A further feature provides for the remote server to include a temporary storage access component for causing a record entry to be written to the temporary storage, wherein the temporary storage is an online storage and the temporary storage access component is an online storage access component.

Further features provide for the remote server to include a storage component, the storage component including a document storage database for storing electronic documents; a user configuration database for storing identifiers of the parties; a biometrics storage database for storing biometric data of the parties; and a key storage database for storing cryptographic keys for use by the remote server, including the cryptographic component.

In accordance with a further aspect of the disclosure there is provided a computer program product for creating a tamper proof record chain of a transaction comprising a number of transaction milestones, the computer program product comprising a computer-readable medium having stored computer-readable program code for performing the steps of:
for each transaction milestone:
creating a record entry including:
   receiving a data message associated with the relevant milestone that includes at least part of a term of the transaction or an identifier of a party to the transaction,
   receiving a timestamp associated with the relevant milestone,
   obtaining a value that provides a link to an immediately preceding and/or following record entry, if any, and
   writing the data message, timestamp and link value to the record entry; and
writing the record entry to a tamper proof storage configured to disable modification of the record entry after completion of the write operation,
wherein a series of data messages of the linked record entries in the tamper proof storage includes at least an identifier of each party to the transaction and represents the record chain of the transaction.

Further features provide for the computer-readable medium to be a non-transitory computer-readable medium and for the computer-readable program code to be executable by a processing circuit.

Embodiments of the invention will now be described, by way of example only, with reference to the accompanying drawings.

### BRIEF DESCRIPTION OF THE DRAWINGS

In the drawings:
- Figure 1: is a schematic representation of a tamper proof record chain;
- Figure 2: is a schematic representation of a system for creating a tamper proof record chain of a transaction in accordance with the disclosure;
- Figure 3: is a swim-lane flow diagram illustrating a method of creating a tamper proof record chain utilising the system of Figure 2;
- Figure 4: is a block diagram showing functional components of a remote server included in the system of Figure 2;
- Figure 5: is a swim-lane flow diagram illustrating steps to create a consultant/client session and creating unsigned agreements in accordance with the disclosure;
- Figure 6: is a swim-lane flow diagram illustrating steps for performing identity verification and agreement to the terms of a transaction by the parties to the agreement in accordance with the disclosure;
- Figure 7: is a swim-lane flow diagram illustrating steps to electronically sign an electronic document in accordance with the disclosure;
- Figure 8: is a block diagram showing functional components of a consultant work station in accordance with the disclosure; and
- Figure 9: illustrates an example of a computing device in which various aspects of the disclosure may be implemented.

### DETAILED DESCRIPTION WITH REFERENCE TO THE DRAWINGS

Methods and systems of creating a secure, tamper proof record chain for a transaction or process conducted between at least two parties or entities are disclosed below. A transaction may be a form of agreement, contract or cooperation between parties that includes a number of key steps or events referred to as milestones hereinafter. The milestones may, for example, correspond to or represent the obtaining or establishment of the *essentialia* of the agreement or contract; or the performance of certain steps required by law or policy (such as authentication of the parties) to name but a few example milestones.

The record chain is a linked series of digital or electronic data records, the links of the chain being formed with secure data links between the records. The secure links may be cryptographic data items, such as a data hash, and may be cryptographically secured and verifiable.

The method may be utilised to create an audit trail of a transaction in the form of an electronically stored tamper proof record chain. Security, as aforesaid, may be provided with cryptographic links in combination with write once read many (WORM) memory. The links, which may be derived from the record entries, in combination with secure timestamps and the read-only nature of the record entries and links (after being written to the WORM memory) provides secure digital proof of the occurrence of a certain milestone, a time at which the milestone occurred, as well as the order in which these milestones occurred. Multiple or redundant tamper proofing is therefore present. The memory in which the record entries (and thus the record chain) are stored is by its nature tamper proof since a particular address of the memory can be written to only once. In addition, the secure data links that link the record entries may be derived from the data stored in the record entries (for example with a cryptographic hash). Any change to the data would be detectable and would have a ripple effect since the stored link values would not correspond to link values calculated as a verification step.

Authentication of the parties may further also be provided using electronic signatures, biometrics of the parties, or a combination thereof to further enhance the security of the record chain and its associated record entries.

In order to facilitate better understanding, an exemplary application of the methods and systems will be used throughout the description in which the tamper proof record chain is used to obtain a secure audit trail. Such an audit trail may be used for auditing a transaction or process that comprises a number of important steps or milestones. Accordingly, the record chain comprising the audit trail may be formed by a series of linked record entries, hereinafter referred to as audit entries, to keep with the example application of the disclosure in an audit trail.

These milestones may be predefined for each type of transaction or process envisaged to be performed on the system by the relevant entity making use of the methods and systems disclosed herein. In the remainder of this specification the word "transaction" should be broadly construed to be capable of being represented by a process with a defined beginning, end and constituent milestone steps. For this reason the terms "transaction" and "process" may be used interchangeably in what follows.

Furthermore, throughout the drawings and the description that follows, the same or similar features present in different drawings are indicated with the same numerals.

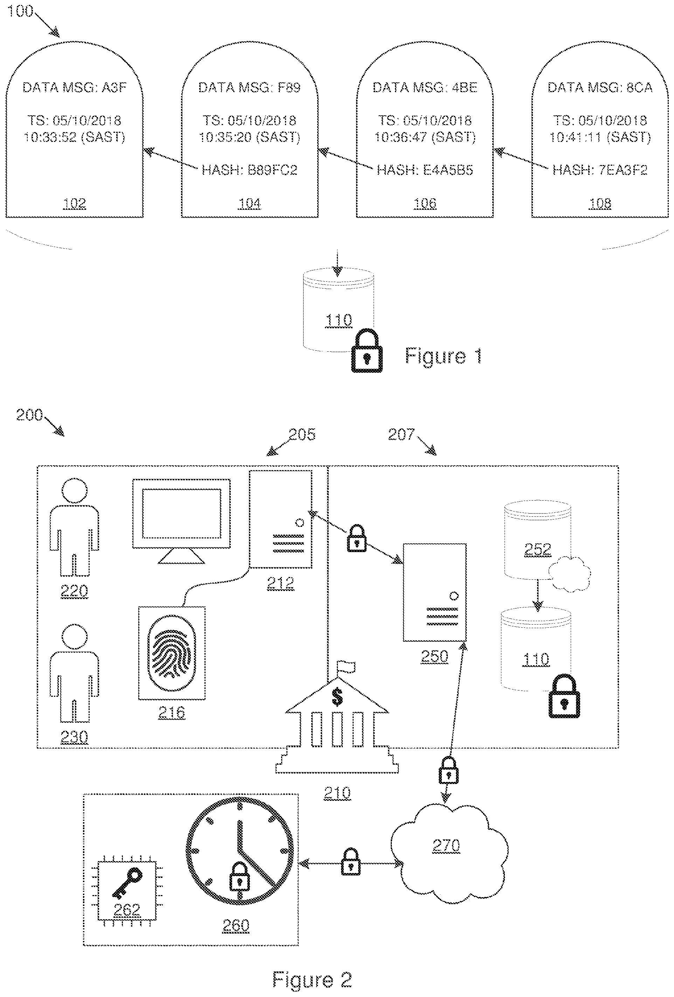

Figure 1 shows a schematic representation of a tamper proof record chain, in this example embodiment an audit trail (100), of a transaction. The transaction consists of four record entries, audit entries (102,104, 106, 108) in this example embodiment, with each audit entry representing a predefined milestone of the transaction. This example of an audit trail (100), its audit entries (102, 104, 106, 108) and the data content of each audit entry is illustrated in a very simplistic form to facilitate understanding of the invention and will be expanded on below.

The transaction represented by the audit trail (100), in this example, is the concluding of an electronic agreement between two parties. At a first milestone of the transaction, the identity of the first party is confirmed. When a positive identification of the first party is made, a first audit entry (102) is created with a data message associated with the milestone. The data message includes data identifying the type of milestone with which it is associated and a data representation of the identity of the first signatory, or a derivative of such a data representation of the identity. The data message may also include other related information such as the identification method, and the like. A timestamp associated with the milestone is obtained from an independent and trusted third party that represents the date and time at which the milestone was completed and at which the audit entry (102) was created.

Similarly, the second milestone of the transaction is the authentication of the second party's identity. When a positive identification of the second party is made, the second audit entry (104) is created with a data message that includes data identifying the type of milestone, a data representation of the identity of the second party, and related information. A timestamp is again obtained from the independent, trusted third party and the timestamp indicates a delay of about 88 seconds between the creation of the first and second audit entries (102, 104). A cryptographic hash value is then obtained of data included in the preceding audit entry, i.e. the first audit entry (102), and the obtained hash value stored in the second audit entry (104).

A "cryptographic hash" or simply referred to as a "hash" as used herein refers to a mathematical and algorithmic calculation performed using a provided data message which returns a fixed size alpha-numeric string called the hash sum. The hash sum can later be compared to the hash sum of another data message to establish whether the data message is identical to the original data message. Hash calculations are considered practically impossible to invert, i.e. to re-create the input data from its hash value alone. Hash sums can therefore be used to compare messages without exposing the message itself.

This hash value creates a unique link between the first and second audit entries (102, 104) as represented graphically by the arrow pointing from the hash value stored in the second audit entry (104) to the first audit entry (102). To prove the link, the hash sum of the first audit entry (102) may be calculated and compared to the hash sum stored in the second audit entry (104). This may be referred to as "linked hashing": a data archiving security mechanism to link audit entries to one another by means of their hashes.

As shown in Figure 1, the link hashing in this example embodiment is a backwards "pointing" hash link, i.e. the hash stored in a particular audit entry corresponds to (and thus points to) an immediately preceding audit entry in the audit trail. Therefore, in this example, the first audit entry (102) has no hash value stored therein since no audit entry precedes it.

Although linked hashing is used here for the purpose of illustration, it will be appreciated by those skilled in the art that other forms of message linking may be employed to link audit entries to form the audit trail of the transaction. What is of importance is that an unbroken chain of milestone events of a transaction is recorded in a way that makes it possible to audit the chain at a later stage.

The third and fourth audit entries (106, 108) respectively represent milestones where the electronic signatures of both parties are obtained and applied to an electronic document containing the terms of the agreement, thereby confirming each party's acceptance of the terms of the agreement. The third audit entry (106) includes a hash value obtained from the data of the second audit entry (104); and the fourth audit entry (108) includes a hash value obtained from the third audit entry (106). The third and fourth audit entries (106, 108) also include timestamps obtained from the independent, trusted third party representing the date and time the relevant milestone was completed (and the corresponding audit entry created).

The four audit entries (102, 104, 106, 108) together form the completed audit trail (100) of the transaction. The audit entries (102, 104, 106, 108) are written to a tamper proof storage (110) that, once the data is written thereto, disables subsequent alteration of the data by only allowing reading of the data and disabling writing thereto. It will be apparent that the individual audit entries that make up the audit trail for the transaction may be written to the tamper proof storage (110) as and when they are created, in other words at different times. The fact that the audit entries of a specific process are linked means that they do not have to be written to the tamper proof storage together.

The fact that the audit trail (100) is stored in the tamper proof, read-only storage (110), combined with the fact that the hash values "point" to immediately preceding audit entries of the same transaction, may be used to prove the integrity of the data contained in the audit trail by comparing the hash value of an audit entry with the hash value stored in a succeeding audit entry. The fact that the timestamp was obtained from an independent trusted source may also be used to prove the order in which the milestones represented by the audit entries were executed. It should be appreciated that, if any of the audit entries (102, 104, 106, 108) were tampered with (before being written to the tamper proof, read-only storage (110)) a calculation of the hash value of the tampered audit entry will not correspond to the hash value stored in a subsequent audit entry. Similarly, the deletion of an audit entry, or the insertion of an audit entry will cause a calculation of the hash values along the audit trail to mismatch the hash values stored in the audit entries linking thereto. This allows any tampering of the data (whether fraudulent or inadvertent) to be detectable.

Figure 2 shows a schematic of an example embodiment of a system (200) for providing a secure audit trail of a process. Throughout this specification, the invention may be described with reference to an embodiment in which the entity using the method is a financial institution and, more specifically, a bank. Reference may therefore be made to the "banking system". However, this is to be understood as purely illustrative and not limiting in the application of the invention disclosed herein. The system (200) includes a bank (210) having a front end (205), which may be a client-facing branch of the bank (210). A duly authorised consultant (220) may represent the bank (210) when transacting with a client (230). The consultant (220) may gain access and use the functions provided by a back-end (207) of the bank (210) by means of a terminal or consultant work station (212) that is in data communication with a remote server (250) of the back-end (207). In this embodiment, the consultant work station (212) consists of a desktop computer to which peripheral equipment are linked, such as a camera, biometric reader device, scanner and printer. The consultant work station (212) may be loaded with the bank's system software, used to execute client transactions.

A biometric reader, which is a fingerprint reader (216) in the present embodiment, is in data communication with the consultant work station (212) and is used for enrolment in the system (200) of the consultant (220) and the client (230). The fingerprint reader (216) is further used as acknowledgement of agreement to a particular milestone/step of a given process, and the generation of an electronic signature or "eSignature" to signify such agreement, as is described further below.

The remote server (250) of the back-end (207) implements a number of functional software components required for the implementation of a method of providing a secure audit trail for a transaction. The back-end (207) furthermore includes an online storage (252) and a tamper proof storage (110), both being accessible to the remote server (250). The tamper proof storage (110) provides data storage for audit entries (and thus the audit trails they form) that, once data is written to it, the relevant data can only be read thereafter and not altered as described above with reference to Figure 1. In computing parlance, this type of memory or data storage is referred to as "write once ready many" or "WORM" memory. The online storage (252) may be used to temporarily store audit data before being written to the tamper proof storage (110). Some of the purposes of the online storage (252) are to increase overall system performance and to serve as an index to the tamper proof storage (110). These indices maintained in the online storage (252) may also increase the efficiency of searching and retrieval of audit entries from the tamper proof storage (110).

In a bank environment, the following are selected examples of transaction types for which a number of milestones may be defined and for which secure audit trails may need to be created:
- secure audit trail for employee enrolment as authorised users on the bank's information technology (IT) system;
- secure audit trail for employee sign-in on the bank's IT system;
- secure audit trail for new local client enrolment;
- secure audit trail for existing local client re-enrolment;
- secure audit trail for client identification;
- secure audit trail for new foreign client enrolment;
- secure audit trail for existing foreign client re-enrolment;
- secure audit trail for capturing local client financial intelligence documents;
- secure audit trail for capturing foreign client financial intelligence documents;
- secure audit trail for electronically signing an agreement;
- secure audit trail for minor and guardian client enrolment;
- secure audit trail for supplementary client enrolment;
- and the like.

As before, it should be noted that this is a non-exclusive list and that any number of additional or alternative transactions or process types may be defined and audited utilising the systems and methods disclosed.

For each of the milestones defined in a particular type of transaction, the method may include the creation of an audit entry when each of these milestones are completed as alluded to above with reference to the audit trail (100) shown in Figure 1. The audit entry may be created when the milestone is successfully completed or, if not successfully completed, at a time it is attempted, in which case reasons for failure may also be included in the audit entry. When the relevant milestone is completed or attempted, it may coincide with the creation of a data message associated with the milestone.

For some milestones, this data message may be a simple identifier that identifies the milestone as a particular milestone and/or being associated with a particular type of transaction. However, the data message may be complex and may include a multitude of data items associated with the transaction and/or the milestone. Regardless of the complexity of the data message associated with the relevant milestone, it may include at least part of a term associated with the transaction or an identifier of a party to the transaction. A term may be, for example, acknowledgment of acceptance by one of the parties to the transaction of a particular provision in an electronic agreement concluded between the bank (210) and the client (230); or an acknowledgement by the client that a particular provision in the electronic agreement was pointed out to them by the consultant (220). The data messages, taken as a set, of all the milestones will therefore include information that represent an electronic signature of each of the signatories.

The system (200) furthermore includes a trusted, independent, third party that issues timestamps on request. This third party is a trusted timestamp authority, or "TSA" (260). The TSA (260) is a self-contained service that may be entirely managed by the trusted third party service. The bank (210) may use standard public key cryptographic techniques to ensure that only the TSA (260) can issue the secure timestamps. The remote server (250) may be in data communication with the TSA (260) via a suitable network (270), such as the Internet, through secure data connections.

The TSA (260) may use a hardware security module (HSM) (262) for secure cryptographic operations and all timestamp signing requests may be handled within a secure boundary of the HSM (262). In the present embodiment, timestamps issued by the TSA (260) may conform to the RFC3161 standard. The HSM (262) may store private keys used by the TSA (260) for signatures of the timestamp tokens. The generation of the TSA signing keys may be carried out within cryptographic modules which meets FIPS PUB 140-2, level 3: a computer security standard used to approve cryptographic modules. The time source of the TSA (260) may be a global positioning system network time protocol (GPS NTP) server cluster hosted at the TSA in order to maintain an independent source of time for the TSA service.

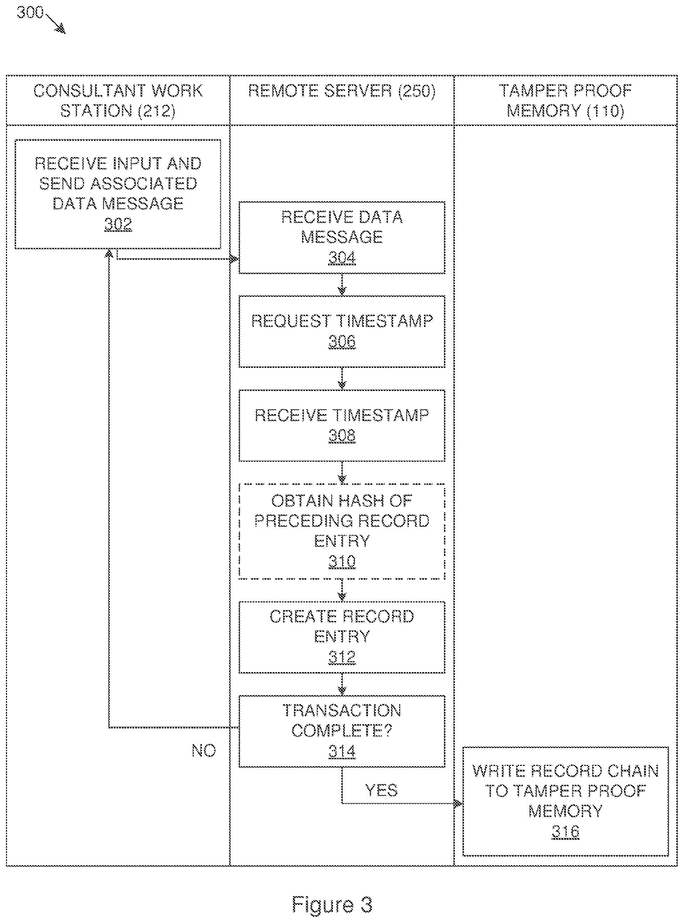

Figure 3 is a swim-lane flow diagram illustrating an example of a method (300) for providing a secure audit trail of a transaction. The method (300) is executed at the remote server (250) associated with the back-end (207) of the bank (210). Figure 3 shows the flow of data and the interaction between the remote server (250) and selected other components of the system (200) during a transaction. The steps of Figure 3 are generally high level steps, each of which may comprise a number of smaller steps. Such steps will be discussed in greater detail below with reference to example milestones in a transaction.

The consultant work station (212) receives (302) input from a user, such as the consultant (220) and/or the client (230). The consultant work station (212) then prepares a data message associated with a milestone of the transaction and includes information identifying the particular milestone and information associated with the identity of one or both of the consultant and client involved in the transaction. The data message is then sent to the remote server (250).

In response to receiving (304) the data message from the consultant work station (212), the remote server (250) may request (306) a timestamp from the TSA (260) and may thereafter receive (308) the timestamp from the TSA (260). Since the aforementioned iteration of steps (302) to (308) were performed pursuant to a first milestone in the transaction, there will therefore not be a preceding audit entry to obtain (310) a hash from. The method (300) may therefore proceed to create (312) an audit entry with the data message and the timestamp, representing the first milestone in the transaction.

However, steps (302) to (308) may be repeated for a second and subsequent milestones of the transaction, which may each have a preceding milestone and associated audit entry to obtain a hash value of. The remote server (250) may therefore obtain (310) a hash value of the preceding audit entry and create (312) a further audit entry that includes the data message, timestamp and the hash value obtained using the preceding audit entry.

If the created (312) audit entry represents the last milestone in the transaction, the transaction may be determined (314) to be complete, and thus also the audit trail consisting of the created audit entries. The remote server (250) may then write (316) the audit trail to the tamper proof storage (110).

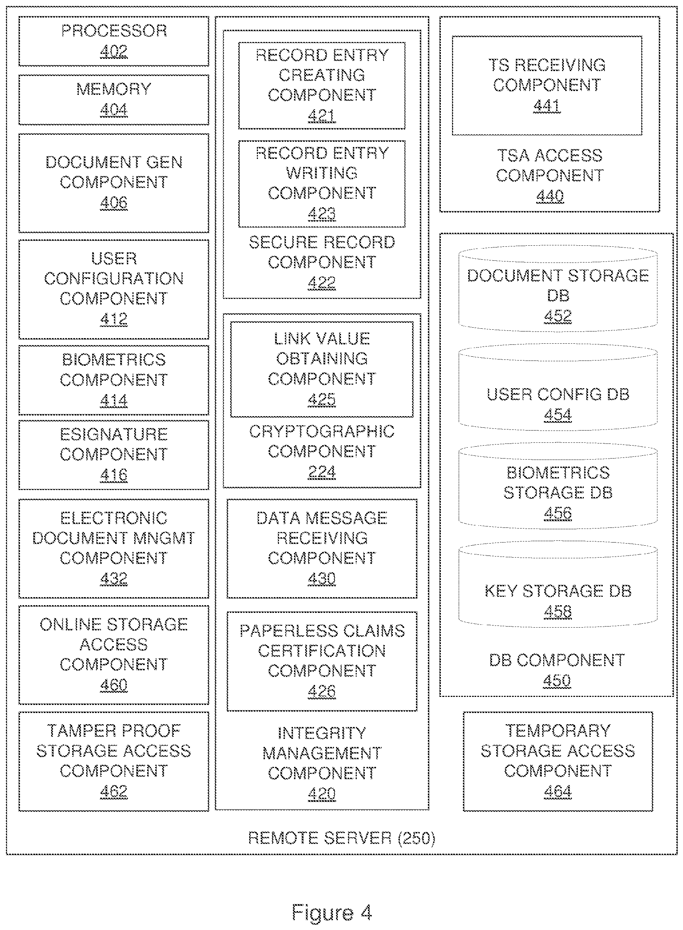

Before proceeding to a more detailed example of the method, a description of the functional components of the system that facilitate the method is required. Figure 4 is a block diagram showing functional components of the remote server (250). As before, the components shown should not be considered as exhaustive, but merely as illustrative. The remote server (250) may include a processor (402) for executing the functions of components described below, which may be provided by hardware or by software units executing on the remote server (250). The software units may be stored in a memory component (404) and instructions may be provided to the processor (402) to carry out the functionality of the described components. In some cases, for example in a cloud computing implementation, software units arranged to manage and/or process data on behalf of the remote server (250) may be provided remotely.

The remote server (250) may further include a document generation component (406) arranged to generate an electronic agreement document. The documents generated thereby may be configured to allow handwritten signatures to be affixed thereto, in instances where a user cannot be biometrically enrolled. In such cases, the document generation component (406) may also affix a barcode generated thereby to the generated document. The document generation component (406) may also be configured to generate unsigned electronic agreements in Portable Document Format (PDF), populated with variable data pertinent to the agreement collected and captured by a consultant (220).

The collected information may be converted by the consultant work station (212) into Extensible Mark-up Language (XML) and communicated to the document generation component (406) for subsequent generation of the required electronic document. The generated, unsigned, document may be allocated a unique document identifier, such as a Globally Unique Identifier (GUID). The document generation component (406) also creates certain sections in the PDF document, called "PDF Named Destinations", which act as bookmarks allowing such important sections to be pointed out to the customer (230) by the consultant (220) before signing of the agreement as may be required by legislation or the internal policies of the bank (210).

After generation of the document, the document generation component (406) may store a record thereof in a document storage database (452) hosted in a database component (450) accessible to the remote server (250) via an electronic document management component (432). A copy thereof may then be sent to the consultant work station (212) for display to the consultant (220) and client (230). To facilitate the client's understanding of the unsigned agreement, the consultant work station (212) may allow the client (230) and the consultant (220) to simultaneously view, read and scroll through the unsigned agreement displayed on the consultant's work station screen. Importantly, the consultant work station (212) may prompt the consultant (220) to draw the client's (230) attention to and explain important provisions of the agreement, marked by means of the PDF Named Destinations. It will be appreciated that these prompts may constitute transaction milestones in themselves, and confirmation that the client (230) was made aware of them by the consultant (220) may thus be recorded as a separate milestone in the audit trail.

The electronic document management component (432) mentioned above may facilitate storage and access to all electronic documents used by the bank (210). These may include documents generated by the document generation component (406), but also other captured documents, such as an identity document, passport or other form of identification of a customer (230) (along with other personal information) when enrolled onto the banking system. Unsigned generated agreements stored in the document storage database (452) may be retrieved by passing the GUID of the generated document to the electronic document management component (432). After an electronic agreement has been executed, whether through eSignatures, written signatures or a combination thereof, the electronic document management component (432) may be prompted to store the executed agreement in the document storage database (452), which may overwrite the unsigned version. Strict access security protocols and compliance rules may be employed to restrict access to the documents stored in the document storage database (452).

The remote server (250) may further include a user configuration component (412) that may facilitate access to a user configuration database (454) accessible to the remote server (250). The user configuration database (454) may serve as a repository of all non-biometric data related to consultants (220) and clients (230), such as names, identity numbers, addresses, contact details, and the like. In the case of consultants (220), the user configuration database (454) may also store the name of the particular bank branch or branches at which the relevant consultant is authorised to act as representative of the bank (210).

The remote server (250) may also include a biometrics component (414) which performs the central role in biometric enrolments and verifications. It may also enable access to a biometrics storage database (456) accessible to the remote server (250), which may store all client (230), consultant (220) and any other biometric data required for the operation of the banking system. Such biometric data may include minutiae derived from fingerprints, captured during enrolment processes. During later verification processes, the biometrics component (414) may be requested to retrieve and provide the biometric information of a particular user from the biometrics storage database (456). These may then be compared with presently scanned fingerprints to confirm the identity of a current user of the banking system, be it the consultant or client. The biometric data stored in the biometrics storage database (456) may be linked to the owner by means of a unique identification number, which may be randomly generated by the banking system during enrolment, may be an existing identity or other number of the owner (issued by a government institution) or may be a combination of both. This may enable the biometrics component (414) to look up and retrieve the required biometric data efficiently from the biometrics storage database (456) using this unique identification number as an index.

The remote server (250) may further include an eSignature component (416) that is tasked with preparing electronic signatures and applying it to electronic documents (including electronic agreements) prepared by the document generation component (406). A rule enforced by the banking system may be that an eSignature of a user must be under their, i.e. the user's, control at all times and the eSignature component (416) may only create and append an eSignature to a document in reaction to a validated biometric instruction from the user to do so. When a document is ready to be signed by the parties, and the parties have agreed to the content of the unsigned document (including the terms of the agreement), the consultant (220) may request the client (230) to place a finger on the fingerprint reader (216), which may in turn scan the client's fingerprint and capture an image thereof. The consultant (220) may also scan their fingerprint and the minutiae may be calculated or derived accordingly.

For each respective party to the agreement, the consultant work station (212) may compile a complex data message to be sent to the eSignature component (416) to prompt the creation of an eSignature for each respective party. The data message may include the party's unique identifier, the minutiae owner type (e.g. client, consultant, co-signatory), the minutiae type (e.g. ridge ending, bifurcation, or dot), the minutiae string (either formatted and compressed or in raw format), an image of the fingerprint scan (including information about its resolution and file format), a timestamp obtained from the TSA (260) at the time the relevant party's biometrics were verified, the client session GUID, an identifier and hash value of the document to be signed (using a cryptographic hash function such as SHA-256), the consultant's unique identifier, an identifier of the consultant work station (212), a geographical location of the consultant work station (212) and hash values of all the aforementioned data items. The hash values may be calculated by a cryptographic component (224) described below.

When the eSignature component (416) receives this eSignature data message, it may verify the hashes included therein and also authenticate the party whose eSignature is to be created (consultant (220) or client (230)) by looking up their biometric information (using their identification number included in the data message) from the biometrics storage database (456) by means of the biometrics component (414). The same procedure may be used if there is a co-signatory involved (such as a guardian where the client (230) is a minor). The eSignature component (416) may also verify the hash of the unsigned document. The eSignature component (416) may retrieve the unsigned agreement from the document storage database (452) by providing the electronic document management component (432) with the document identifier included in the received data message. The eSignature component (416) may then compare the provided document hash in the data message with a hash it calculates of the retrieved electronic document. By doing this, the eSignature component (416) may ensure that the unsigned document has not been altered since its generation and the subsequent viewing of the document by the relevant parties.

When the party and the document (and possibly other security features such as electronic signatures of the data message, for example) have been verified and authenticated, the eSignature component (416) may incorporate, into a signature text component of the retrieved unsigned (or part-signed) PDF document, a fingerprint image and a date and time extracted from the timestamp for the party. When this process has been completed for all the parties to the agreement, and the electronic document therefore fully executed, the eSignature component (416) may return the signed document to the consultant work station (212) to be displayed to the consultant (220) and the client (230). A hard copy may then also be provided to the client (230) if required.

The remote server (250) may also include a TSA access component (440) through which requests for timestamps may be sent to the TSA (260) and through which timestamps generated by the TSA may be received by the remote server (250) for forwarding to the relevant component from which the request originated.

The remote server (250) may further include an integrity management component (420) tasked with creating record entries (audit entries in the example embodiment described herein), and the resulting tamper proof record chain (or secure audit trails in this example), as described above. It may contain a data message receiving component (430) arranged to receive a data message associated with a milestone and then requests a timestamp from the TSA (260) via the TSA access component (440). A timestamp may subsequently be received by a timestamp receiving component (441) of the TSA access component (440).

The integrity management component (420) applies integrity control measures for verification information (or audit information) before transmission of a message (request message or data message) from a source component (which may be implemented in a software application) to a destination component. To this end, it verifies the digital signatures associated with verification information (audit information). For work station deployment of the integrity management component (420) disk encryption may be applied to secure data at rest on the consultant work station (212). Privileged access is governed by group membership of an active directory (AD).

Configuration management life cycle processes are applied and changes to various configurations of the system (200) may therefore occur from time to time. It is possible, however, that these configuration changes are not deployed to some work stations (212) due to an interruption that prevents it from being deployed thereto, (e.g. due to a power outage where the work station is situated). Thus, before the work station (212) can be used, the integrity management component (420) may cause a system launcher to run an automatic check that reads the configuration of the work station (212) and, if the work station has not been reconfigured as required by a master manifest that stipulates the correct configuration of the workstation, the system launcher may automatically update the work station to conform to the requirements of the master manifest. Only once the system launcher has confirmed the integrity of the configuration update will the work station (212) be capable of being used by a consultant (220) for the purposes described herein.

The integrity management component (420) may receive verification of a record entry (for example an audit entry or an assertion ticket), which is integral to a tamper proof record entry to be stored as part of the tamper proof record chain, received from another component by checking a signature thereof. This may be an XML signature (XML-DSig). A public key required to check the signature of the relevant assertion ticket may be obtained via a trusted paperless claims certification component (426) of the integrity management component (420). The paperless claims certification component (426) may be a software based identity that provides security credentials on behalf of an active directory account and may provide public keys of all trusted instances of the paperless claims certification component (426). The security and control measures of the paperless claims certification component (426) may be similar or equivalent to those of Windows^{™} domain controller services.

The paperless claims certification component (426) makes use of a trusted discovery mechanism using a unique identifier in the assertion ticket, which returns the public key of the trusted paperless claims certification component (426) that signed the relevant assertion ticket. Digital signatures, such as the XML-DSig, employ asymmetric cryptography for the verification of record entry and/or record chain information, including smaller data chunks (or audit snippets) included therein.

The integrity of (audit) information received from a component calling the trusted paperless claims certification service (426) may be achieved by checking the XML-DSig of the record (or audit) entry (and its audit snippets). The public key required to check such a signature is obtained from an assertion ticket using a unique identifier which is part of the secure record entry (or audit snippet). The digital keys used for signing and verification may be generated using the .NET "RSACryptoServiceProvider" (to name but one example), which, in turn, uses the SHA-256 hashing algorithm.

The digital keys may be stored in memory using a .NET SecureString (for example) that is accessible only by the integrity management component (420) and its sub-components. The digital keys used for signing may be tied to a specific assertion ticket, which has a short, configurable lifetime controlled by an "expiry time" variable, as defined by a systems architect.

Communication between the integrity management component (420) and paperless claims certification component (426) may be safeguarded by Transport Layer Security (TLS). TLS provides privacy and data integrity between two communicating components (which may be two software applications) thereby preventing man-in-the-middle attacks. Upon establishment of a TLS session, the paperless claims certification component (426) may send its digital certificate to the integrity management component (420) which, in turn, may perform a lookup in an active directory for certificate information that is stored therein and compare this information with the digital certificate details of the paperless claims certification component (426). If the information matches, the integrity management component (420) trusts that the paperless claims certification component (426) is authorised and allows further processing of information to occur. If not, further processing stops.

Upon commissioning or expiry of a paperless claims certification component (426), which may be an instance of a software component, information about its digital certificate may be added to the active directory and the control measure of segregation of duties applied by the bank (210) to ensure appropriate security for the paperless claims certification component is established and maintained. When commissioning the paperless claims certification component (426), the digital certificate information verifying its identity may be added to the active directory. The control of segregation of duties implemented by the bank (210) may be designed to achieve the object that a user who commissions the paperless claims certification component (426), cannot capture the information into the active directory (using a certificate registration tool of the paperless claims certification component). It may be ensured that a user who may be granted authority to commission the paperless claims certification component (426) may not simultaneously have authority to capture information to the active directory.

By means of a link value obtaining component (425), the integrity management component (420) may obtain a value forming a link to an immediately preceding and/or following record entry, if any, to thereby create a link thereto. In the present embodiment, this link is provided by cryptographic hash values in a so-called "link hashing" mechanism and to this end the link value obtaining component (425) may be part of a cryptographic component (224) capable of calculating hash values. A secure record component (422) may then create a record entry with its record entry creating component (421) that includes the data message, timestamp and hash value.

The secure record component (422) may verify the data contained in the record chain and may authorise the writing of record entries. It may further ensure that tamper proof record chains are stored to tamper proof storage (110) and the recovery of records for online storage purposes from the tamper proof storage (110). The secure record component (422) may facilitate the retrieval of record entries for operational purposes from the tamper proof storage (110). It may enforce integrity verification of record entries and the tamper proof record chain formed thereby by means of digital signatures thereof before it is written to the tamper proof storage (110). To this end, the secure record component (422) may be awarded permanent privileged access according to restricted active directory group membership.

The secure record component (422) may store the created record entry or entries in an online storage (252) accessible to the remote server (250) through an online storage access component (460). Upon a future event, a record entry writing component (423) may cause the created record entry or entries to be written to a tamper proof storage (110) accessible to the remote server (250) by means of a tamper proof storage access component (462). This future event may either be the completion of the transaction (and thus the completion of the entire record chain), or may be the elapsing of a preconfigured period of time of inactivity on the relevant record chain since the creation of the last entry record thereof. There may also be a predetermined maximum number of record entries that will be written in a batch to the tamper proof storage (110). As before, it should be noted, however, that separate record entries that make up the record chain of a transaction do not have to be written to the tamper proof storage simultaneously. The linking provided between different record entries belonging to the same transaction makes it possible for record entries to be written to the tamper proof storage (110) separately, without the continuity between them being compromised.

The secure record component (422) may also provide the functionality to retrieve record entries or complete record chains from the tamper proof storage (110), via the tamper proof storage access component (462), for operational purposes. The secure record component (422) may write these retrieved record entries to the online storage (252) via the online storage access component (460) for indexing purposes, for example.

With the high-level steps of the method (300) established above and with the functional components of the system more fully described, the steps of the method of the disclosure will now be explained in greater detail in what follows, with reference to example milestones in an example transaction. The example transaction may be for an application for the provision of credit by the client (230) to the bank (210).

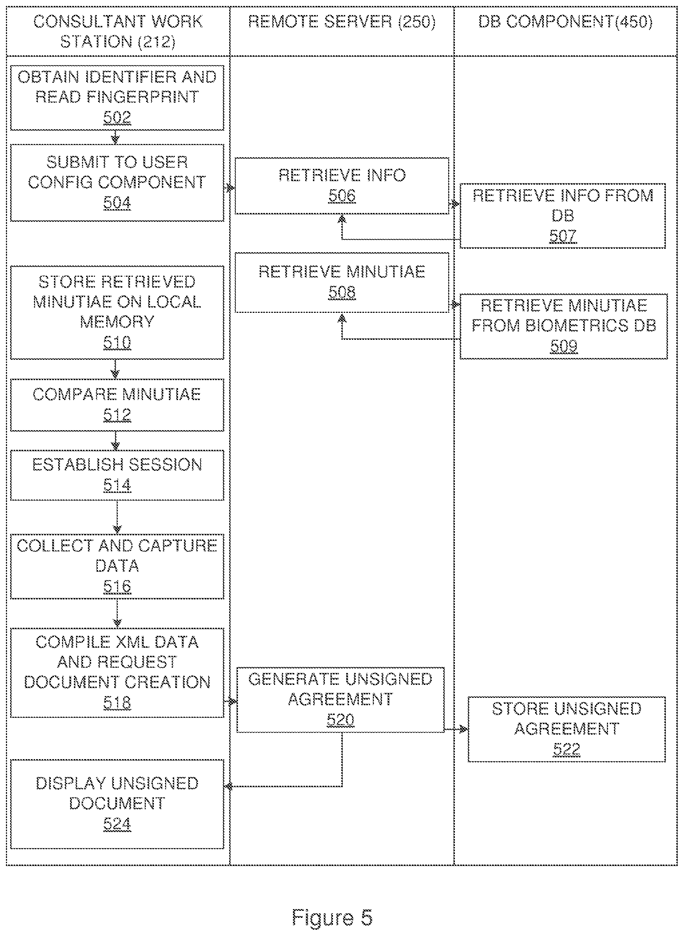

Referring to Figure 5, a number of preparatory steps, which are not necessarily recorded as audit entries, may be required to complete a transaction. In the present embodiment, the eSignature process employed by the bank (210) may require face to face identification of all users of such eSignatures and may use fingerprint biometrics as a factor of the authentication of the user identity. The eSignatures may be uniquely linked to the user and may be capable of identifying the user.

The eSignatures may be created under the control of the user and may be linked to data messages recording the transactions and agreements concluded between the bank (210) and the client (230). It may be signed in a manner that any subsequent change to the data or data messages will be detectible. In certain cases, internal policies or legislation may require information to be presented or retained in its original form. The bank (210) may meet this requirement by employing measures to ensure the integrity of the information (including data comprising the eSignatures) from the time that it was first generated to its final form. These measures ensure that this information remains complete and unaltered (except for the addition of any endorsements which arise in the normal course of its processing, storage and display).

These steps may involve the logging on of the consultant (220) onto the banking system via the consultant terminal (212), together with the subsequent logging on of the client (230), which may be required to create a consultant/client session on the banking system to initiate the transaction. It may further include the preparation of an unsigned electronic document, i.e. the agreement. To initiate a client session, the consultant (220) may be required to already be signed into the banking system and positively authenticate the client (230). The consultant (220) may not have to sign in before each client session if he or she is already signed in to the banking system. If the consultant is signed out of the banking system he or she will be required to sign back in before a client session can be initiated.

To log onto the banking system, the consultant (220) may be required to place a finger on the fingerprint reader (216) connected to the consultant work station (212). The consultant (220) may then be prompted by the consultant work station (212) for a unique identification number allocated to the consultant during an initial enrolment procedure, alternatively the unique identifier may have been used by the consultant (220) to log onto the underlying operating system running on the consultant work station (212) and may thus already be known to the work station (212). Thereby, the consultant work station (212) obtains (502) both the unique identifier of the consultant as well as a fingerprint reading.

The scanning of the fingerprint may cause the consultant work station (212) to submit (504) the consultant identification number to a user configuration component (412) implemented by the remote server (250) to retrieve information, such as the bank branch details the consultant (220) is enrolled for, from a user configuration database (454). The query may also be submitted to a biometrics component (414) to retrieve the minutiae of the consultant (220), stored during enrolment, from a biometrics storage database (456).

The information and minutiae may be retrieved (506, 508) by the relevant components, via the database component (450) using the unique identifier of the consultant as lookup reference. The database component (450) may retrieve (507) the information from the user configuration database (454) and retrieve (509) the minutiae from the biometrics database (456) and send the retrieved information and minutiae to the consultant work station (212). The retrieved consultant minutiae may then be stored (510) on local memory of the consultant work station (212). This may also confirm the enrolment status of the consultant (220).

The consultant's minutiae captured and calculated during the logon procedure by the scanning of the consultant's fingerprint may then be compared (512) to any one of the fingerprint minutiae retrieved from the biometrics storage database (456) and stored in the work station's local memory. If a match is established, the identity of the consultant (220) may be authenticated and a consultant session established, thereby enabling the consultant (220) to use the banking system to perform transactions with a client (230).

The same procedure, to a large extent, may be followed to establish a client session. The consultant (220) may obtain (502) an identifier of the client (230), which may be a government issued identification number, a bank card number, personal identification number (PIN) etc. The consultant (220) may prompt the client (230) to place a finger on the fingerprint reader (216) connected to the consultant work station (212) and thus also obtains (502) a fingerprint reading of the client (230).

The scanning of the fingerprint may prompt the consultant work station (212) to submit (504) the client identification number to the user configuration component (412) implemented by the remote server (250) to retrieve information, such as an identity document of the client (230) stored on a document storage database (452) during enrolment. The query may also be submitted to a biometrics component (414) to retrieve the minutiae of the client (230), stored during enrolment, from a biometrics storage database (456). The fingerprints of the client (230) may have been sent to a government institution to confirm the identity of the client (230) during the enrolment process. A profile picture of the client (230) may also have been stored in the document storage database (452) during enrolment and retrieved for display to the consultant (220) to further aid identification of the client (230).

The information and minutiae may be retrieved (506, 508) by the relevant components, via the database component (450) using the unique identifier of the client as lookup reference. The storage component (450) may retrieve (507) the information from the document storage database (452), retrieve (509) the minutiae from the biometrics database (456) and send the retrieved information and minutiae to the consultant work station (212). The retrieved client minutiae may then be stored (510) on local memory of the consultant work station (212). The consultant (220) may view the retrieved identity document and visually confirm the identity of the client (230) from a photo on the identity document as a second factor of authentication. This may also confirm the enrolment status of the client (230).

The client's minutiae captured and calculated during the logon procedure by the scanning of the client's fingerprint may then be compared (512) to any one of the fingerprint minutiae retrieved from the biometrics storage database (456) and stored in the work station's local memory. If a match is established, the identity of the client (230) may be authenticated and a client session established (514). The establishing of a client session may be a prerequisite for using eSignatures as explained further below.

Steps (502) to (512) may similarly be followed to identify a co-signatory that may be required. This may happen, for example, when a guardian needs to co-sign an agreement with a minor.

In order to generate an agreement, the consultant (220) may collect the variable data, pertinent to the agreement and necessary for agreements to be concluded between the bank (210) and the client (230), from the client (230) and capture (516) it onto the consultant work station (212). The consultant work station (212) may then compile the data captured into XML format and request (518) the document generation component (406) to generate an unsigned agreement. The document generation component (406) may then generate (520) the unsigned agreement in PDF format and populate it with the data pertinent to the agreement, such as the signatory names, address, etc. The unsigned agreement may then be annotated with PDF Named Destinations in order to ensure that important sections of the unsigned PDF can be drawn to the attention of the client (230) by the consultant (220).

A unique identifier (GUID) for the unsigned document may be created and stored (522) in the document storage database (452) via the electronic document management component (432). The unsigned document may also be sent to the consultant work station (212) to be displayed to the consultant (220) and the client (230). To facilitate the client's understanding of the unsigned agreement, the client (230) and the consultant (220) may simultaneously view, read and scroll through the unsigned agreement on the consultant's work station screen. As previously mentioned, the consultant work station (212) may also prompt the consultant (220) to draw the client's (230) attention to, and explain important provisions of the agreement, marked by means of the PDF Named Destinations.

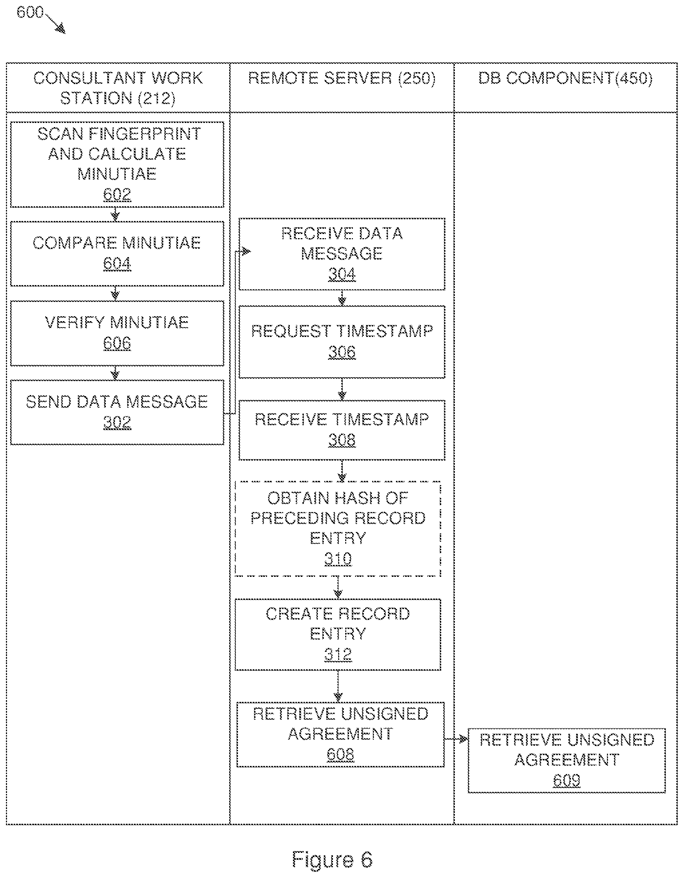

Figure 6 is a swim-lane flow diagram showing the steps in a method (600) following the steps explained with reference to Figure 5, in which the client accepts the agreement and audit entries are created of the acceptance and authentication of the parties.

If the client (230) agrees to the content of the unsigned PDF agreement, the consultant (220) may request the client (230) to indicate his/her acceptance of the terms of the agreement by placing one of his/her fingers on the fingerprint reader (216). The consultant work station (212) may thereby scan (602) the client's fingerprint, capture an image of the scanned fingerprint, and also calculate the fingerprint's minutiae which is stored locally on the consultant work station (212). The consultant work station (212) may then compare (604) the client's minutiae to the consultant's minutiae, also available on the local memory of the consultation work station (212) from when the consultant (220) created a consultant session, to ensure that the client's minutiae do not match any of the consultant's minutiae. The consultant work station (212) may then verify (606) the client's minutiae against the client's minutiae captured during his/her biometric enrolment and retained for the client session.

On successful verification of the client's minutiae, the consultant work station (212) may send (302) a data message to the integrity management component (420) of the remote server (250) that may include data identifying this acceptance and verification as a milestone for auditing purposes. The remote server (250) may then receive (304) the data message. The work station (212) may have digitally signed the data message with a private key of the work station before sending it to the remote server (250). To verify the integrity of the sending work station (212), the integrity management component (420) may use a public key of the work station (stored in an active directory accessible to the work station (212) and integrity management component (420)) to verify the digital signature of the data message which, in turn, verifies the integrity of the data message originator, i.e. the work station.

The remote server (250) may, via the TSA access component (440), request (306) a timestamp from the TSA (260). A timestamp associated with the milestone may subsequently be received (308) via the timestamp receiving component (441). Being the first milestone in the audit trail, there may be no previous audit entry to obtain a hash of. The audit entry creating component (421) may therefore directly proceed to create (312) a new audit entry including the data in the received data message. At this stage, the created audit entry may be stored in the online storage (252) via the online storage access component (460) for later writing to tamper proof storage (110).

These steps may be repeated for the consultant (220) to, in their capacity as authorised representative of the bank (210), accept the agreement. The consultant work station (212) may scan the consultant's fingerprint, capture an image of the scanned fingerprint, and also calculate the fingerprint's minutiae which is stored locally on the consultant work station (212). The consultant work station (212) may then compare the consultant's minutiae to the client's minutiae, also available on the local memory of the consultation work station (212) from when the client (230) created a client session, to ensure that the consultant's minutiae do not match any of the client's minutiae. The consultant work station (212) may then verify the consultant's minutiae against the consultant's minutiae captured during his/her biometric enrolment and retained for the consultant session.

On successful verification of the consultant's minutiae, the consultant work station (212) may send (302) a data message to the integrity management component (420) of the remote server (250) that includes data identifying this acceptance and verification as a milestone for auditing purposes. The remote server (250) may receive (304) the data message and, via the TSA access component (440) request a timestamp from the TSA (260). A timestamp associated with the milestone is subsequently received (308) via the timestamp receiving component (441). The link value obtaining component (425) may then obtain (310) a hash value of the preceding audit entry. The record entry creating component (421) may then proceed to create (312) a new audit entry including the data in the received data message.

The data messages sent in the aforementioned steps may contain a number of data items as mentioned above. The data message may include, for example, the respective parties' unique identifiers (client and/or consultant, as the case may be), the minutiae owner type (client, consultant, co-signatory), the minutiae type (ridge ending, bifurcation, or dot), the minutiae string (either formatted and compressed or in raw format), an image of the fingerprint scan (including information about its resolution and file format), a timestamp obtained from the TSA (260) at the time the relevant party's biometrics were verified, the client session GUID, an identifier and hash value of the document to be signed (using a cryptographic hash function such as SHA-256), the consultant's unique identifier, an identifier of the consultant work station (212), a geographical location of the consultant work station (212) and hash values of all the aforementioned data items.

The parties, at this stage have therefore accepted the terms of the agreement by having their fingerprints read. The remote server (250) may then retrieve (608), by means of the electronic document management component (432), the stored unsigned agreement by providing the document identifier (GUID) received in the data message from the consultant work station (212) earlier. It may be retrieved (609) from the document storage database (452) by the database component (450) using the document identifier and the retrieved document may be returned to the remote server (250). The document may, at this stage, be ready to undergo electronic signing.

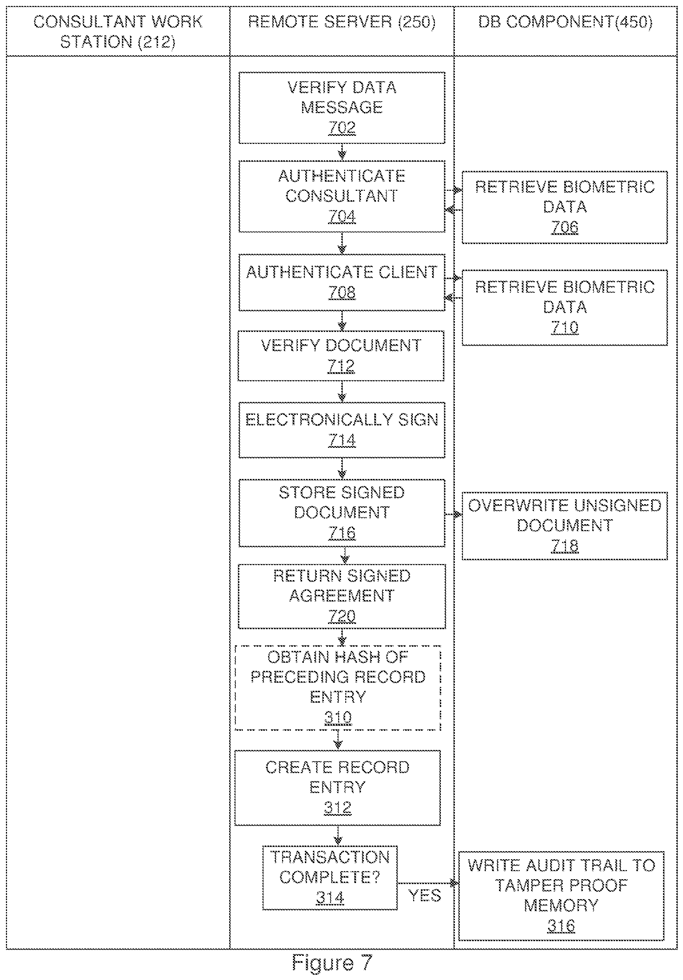

Figure 7 shows the steps that may be executed during an electronic signing of the unsigned agreement. The eSignature component (416) may perform the overall task and may make use of the various pieces of data included in the data messages created when the respective parties accepted the agreement by scanning their fingerprints. To verify (702) the integrity of the data message, the remote server (250) may instruct the cryptographic component (224) to calculate a hash value of the data message and then compare the calculated hash with the hash value of the data message received therewith.

The consultant (220) may again be authenticated (704) by extracting the consultant's unique identifier from the data message and, via the biometrics component (414), retrieving (706) the consultant's biometric data from the biometrics storage database (456) using the consultant's identifier as an index. The biometrics component (414) may then compare the biometric data (fingerprint minutiae) received in the data message with the retrieved biometric data.

Similarly, the client (230) may again be authenticated (708) by extracting the client's unique identifier from the data message and, via the biometrics component (414), retrieving (710) the client's biometric data from the biometrics storage database (456) using the client's identifier as an index. The biometrics component (414) may then compare the biometric data (fingerprint minutiae) received in the data message with the retrieved biometric data.

The remote server may then verify (712) the integrity of the unsigned document, confirming that it had not been altered since the parties indicated their agreement to the document. It may instruct the cryptographic component (224) to calculate a hash value of the document retrieved in step (609) and to compare the calculated hash with the document hash included in the data message.

For each signatory, i.e. client (230) and consultant (220), the eSignature component (416) may then electronically sign (714) the unsigned agreement by incorporating a fingerprint image and corresponding date and time into a signature text component of the unsigned document. The date and time may be extracted from the timestamp value included in the data message associated with each party, which had been obtained from the TSA (260) at step (440) above.

The eSignature component (416) may then connect to the electronic document management component (432) with specific sign-in credentials reserved exclusively for the eSignature component (416), to store (716) the final, signed agreement. The electronic document management component (432) may then store (716) the signed agreement in the document storage database (452), thereby overwriting (718) the previously stored unsigned document.

The signed document may be returned (720) by the eSignature component (416) to the consultant work station (212) for displaying to the consultant (220) and the client (230). Thereby, the parties may visually confirm that the agreement has been electronically signed with the fingerprint images visible on the agreement; and confirm that the agreement they signed is indeed the agreement displayed on the work station by having their fingerprints scanned.

For each of the signatories, the electronic signing may also signify a milestone of the transaction. For each signatory, the remote server (250) may therefore prepare an audit entry to be linked into the audit trail. Through the cryptographic component (224) the remote server (250) may obtain (310) a hash value of the preceding audit entry in the audit trail. Through the record entry creating component (421) it may then create (312) a new audit entry that includes data from the data message (or any subset thereof) received by the remote server (250) when the parties accepted the agreement by scanning their respective fingerprints.

The newly created audit entry may also include the hash value calculated from the previous audit entry, thereby creating a link thereto. It may also include a timestamp obtained from the TSA (260). It may use the timestamp contained in the data message since, in this instance, a timestamp had been obtained from the TSA (260) and included in the data message. However, it may equally retrieve a new timestamp from the TSA (260) via the TSA access component (440). Since all the milestones of the transaction have been completed, and the transaction thus complete, it means that the audit trail for this transaction may also be completed by these last audit entries. Therefore, the remote server (250) may cause the audit trail to be written (316) to tamper proof storage (110).

As mentioned above, in the event that the client (230) cannot be biometrically enrolled, the client (230) may be required to affix his/her handwritten signature to printouts of the relevant documentation, when interacting or transacting with the bank (210). If a client (230) is not enrolled or his/her fingers are not available to be scanned, the consultant work station (212) may send an indicator to the document generation component (406) to generate an agreement with a signature component allowing for handwritten signatures. The document may be generated, displayed on the consultant work station (212) and then printed for the handwritten signature to be affixed, or may be captured electronically with a signature tablet and superimposed on the document. The document in this instance may also carry a barcode. The document may then be scanned into the electronic document management component (432) and the barcode may be recognised for the document to be classified, correctly indexed and electronically filed.

A timestamp may be generated immediately after the relevant milestone is completed or attempted, or as close as possible thereafter, allowing a tolerance for latencies in data transmission, etc. When the timestamp is created by the TSA (260), it may receive a hash associated with the audit entry (and thus its data message) that is to be timestamped. This data hash may be appended to the timestamp value and a hash (a timestamp hash) may be created from the combination of the data hash and the timestamp. This may prove that the data message and timestamp are inextricably linked. The timestamp and/or timestamp hash may furthermore be signed with an encryption key associated with the TSA (260) which may prove that the timestamp originated from the TSA (260).

In retaining information contained in a data message (including, but not limited to, agreements concluded between the bank (210) and a client (230)) that is signed using an eSignature, the bank (210) may ensure that the information contained in the data message is accessible so as to be used for subsequent reference and is in a format in which it was originally generated. Alternatively the data may be in a format which can be demonstrated to represent accurately the information generated. A timestamp issued by the independent TSA (260) may be embedded in data messages retained by the bank (210), indicating when the data message was generated, signed by the client (230), and signed by the consultant (220).

Prior to using an eSignature to accede to agreements, the relevant parties may be given the opportunity to consent to and confirm their agreement, in writing, authorising the bank (210) to scan and store the fingerprints (during enrolment, for example) and authenticate the identity of the person (with a government institution, for example). The bank (210) may then generate electronic signatures using the person's fingerprints as a factor of authentication. The bank (210) may ensure that the person's eSignature used in the signing of electronic records and communications provides a functional equivalent to that person's handwritten signature in signing text on paper. A client (230) may also be given the opportunity to agree that the bank (210) may rely on the eSignature as evidence that the signatory intends to adopt and be bound by the information contained in any data message to which the eSignature may be attached to, incorporated in, or logically associated with.

Although only one consultant work station (212) has been shown in Figure 1, it will be understood that the bank (210) may have a plurality of such work stations, both in one particular branch as well as in a plurality of other branches. These work stations may connect securely to the back-end (207) of the bank and, more specifically, to the remote server (250) thereof through network connections. The network may be an intranet of the bank or, alternatively, the Internet (270). Communication over these network connections may be protected with security protocols such as Transport Layer Security (TLS). TLS provides privacy and data integrity between two communicating computer applications thereby preventing man-in-the-middle attacks. Network access to critical components may further be limited by means of network segmentation, for example. Similarly, the remote server (250) may connect to the TSA (260) with a connection secured by means of TLS through the internet (270).

In cases where the remote server (250) is provided through distributed computing, with some of the components of the remote server (250) being implemented on different physical computing devices, the communication between the various components may also be secured with TLS, and cryptographic signatures may be used to verify the identity of a component from which a communication originates. The keys for signing or verifying these cryptographic signatures may be stored in a key storage database (458) accessible to the remote server (250) and thus its various sub-components.

The methods and systems disclosed herein may therefore promote the assurance that the electronic records that may be relied on by the bank as evidence in showing that these records were generated, stored and communicated reliably and that the originator of the electronic record has been identified and authenticated. This disclosure further promotes the assurance that the integrity of the electronic record has been maintained, and that no records had been altered, deleted or inserted. This is provided by the linking of audit entries and their subsequent writing to a WORM memory, effectively casting the record in stone, so to speak. This may allow presiding officers in administrative and/or legal proceedings to attribute appropriate evidential weight to the records of the electronic signatures and agreements.

As mentioned above, each audit entry may be linked to the previous and/or following audit entries. Furthermore, data of the previous and/or following audit entries used in deriving a current audit entry's hash may include the hash of the previous and/or following entry, as the case may be. In this way, the hash of one entry may be inextricably linked to all the audit entries in the audit trail.

The audit entries may be written to the WORM memory (tamper proof storage (110)) as soon as it is created. In this case, the hash of an audit entry can only refer to the immediately preceding audit entry, since a hash of an audit entry would not be able to be updated retrospectively with a hash value of an audit entry that was created later in time. Alternatively, the audit entries of a particular audit trail may be kept in read/write memory until all the audit entries of the relevant audit trail is completed and write the entire audit trail to WORM in one operation. This read/write memory may, however, still be tamper-evident. In this case, the hash of each audit entry could also include a hash of an immediately following milestone's audit entry. This may create a bidirectional link between audit entries. The hashes may be calculated, and the audit entries updated therewith, immediately before writing the audit trail to the WORM.

In one embodiment, a "notary mechanism" may be utilised, in which a number of milestones or audit events (represented by audit entries) are notarised together as one set. In this context, notarising means committing these audit event records together with a header record (the notary record) to tamper proof storage (110). Audit events within a set are link-chained, as explained above, providing evidence of the sequence of audit events, and that no event was inserted or removed. Notary sets are link-chained, providing evidence that no set was inserted or removed.

This may be further enhanced by assigning a sequence number to each audit entry, which may also be included in the calculation of an audit entry's hash for hash linking purposes. The notary record mentioned above may include a sequence value of a first audit entry in the notarised audit record set as well as that of a last audit entry therein. The entire notarised set may further be digitally signed during a signing ceremony.

Therefore, the notary mechanism is utilised to demonstrate that every audit event existed at the time it claims to have existed, and that no event was inserted or removed at a later stage. The system administrator may define the maximum number of audit events which are notarised together as one set. A timespan may also be defined and configured after which a notary set will be sealed, and its audit events notarised together as one set.

With regards to the link-hashing utilised in the creation of a linked audit trail, the example method above indicated a "backward" linking hash. That is, the hash contained in an audit entry is obtained from the data in an immediately preceding audit entry. It will be appreciated that, if the audit entries are written to tamper proof storage (110) immediately after creation, this would necessitate backward linking.

Forward and bi-directional hashes may, however, be employed where an audit trail is only written to tamper proof storage (110) after the completion of the entire audit trail. In such a case, the hashes contained in earlier audit entries may be updated with values calculated from later audit entries before being finally committed to tamper proof storage (110). With bi-directional hash linking, it is referred to an audit entry that includes a hash value of both its immediately preceding and its immediately succeeding audit entry.

It should be appreciated that the features described above with reference to audit entries and audit trails equally apply to the record entries and record chain of which the audit entry and audit trail are, respectively, examples.

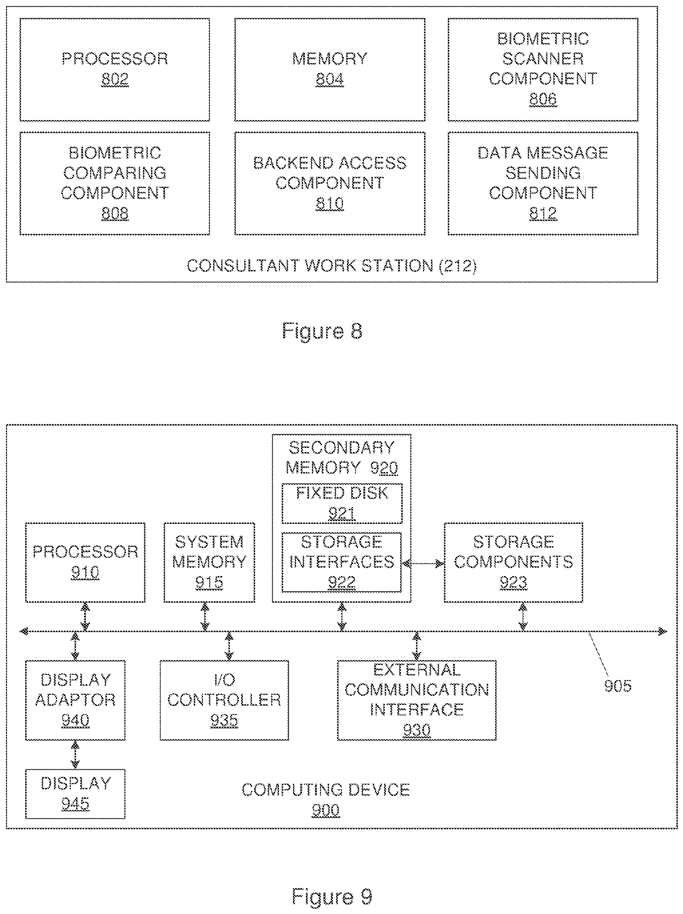

Figure 8 shows a block diagram of the functional components of a consultant work station (212). It may include a processor (802) for executing the functions of components described below, which may be provided by hardware or by software units executing on the remote server (250). The software units may be stored in a memory component (804) and instructions may be provided to the processor (802) to carry out the functionality of the described components. In some cases, for example in a cloud computing implementation, software units arranged to manage and/or process data on behalf of the remote server (250) may be provided remotely.

The consultant work station (212) may further include a biometric scanner component (806) for receiving, from a fingerprint scanner (216), biometric scan data and for obtaining minutiae therefrom. The memory (804) may further be for locally storing biometric data, such as minutiae, of biometric data obtained from the fingerprint scanner (216) via the biometric scanner component (806). The consultant work station (212) also includes a biometric comparing component (808) for comparing obtained and/or retrieved sets of biometric data with each other.

The consultant work station (212) may further include a backend access component (810) for providing access to the back-end (207), the remote server (250) and its functional components. It may further include a data message sending component (812) for compiling and sending data messages associated with milestones of a transaction to the remote server (250). It may include such functionality as the compiling of XML data to be sent to the remote server (250) for the purposes of populating the unsigned document with the data contained in the XML data structure.

The consultant work station (212) may include a display component for displaying unsigned documents to a client (230) before signing to enable them to confirm the terms of the agreement before acceptance thereof; and to display the signed document to the client to allow them to visually confirm the electronic signatures thereon.

The consultant work station (212) may provide various user interfaces. An administrative user interface thereof may be used only by administrators to whom access is granted to perform administrative tasks, such as managing secure audit servers (adding, activating and deactivating); configuring internal security settings; configuring notary settings; configuring common originator security settings; and managing originating systems (adding, configuring, deleting systems from where audit trail service requests may originate). This user interface may be awarded temporary restricted access according to active directory group membership, which may be authorised by two authorised bank officials having a joint mandate. The requester cannot be the approver, and neither the requester nor the approver can facilitate the grant of access to the administrative user interface (according to a segregation of duty principle).

An operational user interface of the consultant work station (212) may provide functionality to compile and check reports; search audit records; and compile audit record evidence. This user interface may be awarded permanent restricted access according to active directory membership with similar segregation of duty security measures. Secure delegation, control and management of privileged access to sensitive assets, accounts and passwords may be provided by privileged account management technology or PAM. Interactive access to subsystems of the bank (210) is governed by PAM.

Figure 9 illustrates an example of a computing device (900) in which various aspects of the disclosure may be implemented. The computing device (900) may be embodied as any form of data processing device including a personal computing device (e.g. laptop or desktop computer), a server computer (which may be self-contained, physically distributed over a number of locations), a client computer, or a communication device, such as a mobile phone (e.g. cellular telephone), satellite phone, tablet computer, personal digital assistant or the like. Different embodiments of the computing device may dictate the inclusion or exclusion of various components or subsystems described below.

The computing device (900) may be suitable for storing and executing computer program code. The various participants and elements in the previously described system diagrams may use any suitable number of subsystems or components of the computing device (900) to facilitate the functions described herein. The computing device (900) may include subsystems or components interconnected via a communication infrastructure (905) (for example, a communications bus, a network, etc.). The computing device (900) may include one or more processors (910) and at least one memory component in the form of computer-readable media. The one or more processors (910) may include one or more of: CPUs, graphical processing units (GPUs), microprocessors, field programmable gate arrays (FPGAs), application specific integrated circuits (ASICs) and the like. In some configurations, a number of processors may be provided and may be arranged to carry out calculations simultaneously. In some implementations various subsystems or components of the computing device (900) may be distributed over a number of physical locations (e.g. in a distributed, cluster or cloud-based computing configuration) and appropriate software units may be arranged to manage and/or process data on behalf of remote devices.

The memory components may include system memory (915), which may include read only memory (ROM) and random access memory (RAM). A basic input/output system (BIOS) may be stored in ROM. System software may be stored in the system memory (915) including operating system software. The memory components may also include secondary memory (920). The secondary memory (920) may include a fixed disk (921), such as a hard disk drive, and, optionally, one or more storage interfaces (922) for interfacing with storage components (923), such as removable storage components (e.g. magnetic tape, optical disk, flash memory drive, external hard drive, removable memory chip, etc.), network attached storage components (e.g. NAS drives), remote storage components (e.g. cloud-based storage) or the like.

The computing device (900) may include an external communications interface (930) for operation of the computing device (900) in a networked environment enabling transfer of data between multiple computing devices (900) and/or the Internet. Data transferred via the external communications interface (930) may be in the form of signals, which may be electronic, electromagnetic, optical, radio, or other types of signal. The external communications interface (930) may enable communication of data between the computing device (900) and other computing devices including servers and external storage facilities. Web services may be accessible by and/or from the computing device (900) via the communications interface (930).

The external communications interface (930) may be configured for connection to wireless communication channels (e.g., a cellular telephone network, wireless local area network (e.g. using Wi-Fi^{™}), satellite-phone network, Satellite Internet Network, etc.) and may include an associated wireless transfer element, such as an antenna and associated circuitry.

The computer-readable media in the form of the various memory components may provide storage of computer-executable instructions, data structures, program modules, software units and other data. A computer program product may be provided by a computer-readable medium having stored computer-readable program code executable by the central processor (910). A computer program product may be provided by a non-transient computer-readable medium, or may be provided via a signal or other transient means via the communications interface (930).

Interconnection via the communication infrastructure (905) allows the one or more processors (910) to communicate with each subsystem or component and to control the execution of instructions from the memory components, as well as the exchange of information between subsystems or components. Peripherals (such as printers, scanners, cameras, or the like) and input/output (I/O) devices (such as a mouse, touchpad, keyboard, microphone, touch-sensitive display, input buttons, speakers and the like) may couple to or be integrally formed with the computing device (900) either directly or via an I/O controller (935). One or more displays (945) (which may be touch-sensitive displays) may be coupled to or integrally formed with the computing device (900) via a display (945) or video adapter (940).

The foregoing description has been presented for the purpose of illustration; it is not intended to be exhaustive or to limit the invention to the precise forms disclosed. Persons skilled in the relevant art can appreciate that many modifications and variations are possible in light of the above disclosure.

Any of the steps, operations, components or processes described herein may be performed or implemented with one or more hardware or software units, alone or in combination with other devices. In one embodiment, a software unit is implemented with a computer program product comprising a non-transient computer-readable medium containing computer program code, which can be executed by a processor for performing any or all of the steps, operations, or processes described. Software units or functions described in this application may be implemented as computer program code using any suitable computer language such as, for example, Java^{™}, C++, or Perl^{™} using, for example, conventional or object-oriented techniques. The computer program code may be stored as a series of instructions, or commands on a non-transitory computer-readable medium, such as a random access memory (RAM), a read-only memory (ROM), a magnetic medium such as a hard-drive, or an optical medium such as a CD-ROM. Any such computer-readable medium may also reside on or within a single computational apparatus, and may be present on or within different computational apparatuses within a system or network.

Flowchart illustrations and block diagrams of methods, systems, and computer program products according to embodiments are used herein. Each block of the flowchart illustrations and/or block diagrams, and combinations of blocks in the flowchart illustrations and/or block diagrams, may provide functions which may be implemented by computer readable program instructions. In some alternative implementations, the functions identified by the blocks may take place in a different order to that shown in the flowchart illustrations.

Some portions of this description describe the embodiments of the invention in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. The described operations may be embodied in software, firmware, hardware, or any combinations thereof.

The language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based hereon. Accordingly, the disclosure of the embodiments of the invention is intended to be illustrative, but not limiting, of the scope of the invention, which is set forth in the following claims.

Finally, throughout the specification and claims unless the contents requires otherwise the word 'comprise' or variations such as 'comprises' or 'comprising' will be understood to imply the inclusion of a stated integer or group of integers but not the exclusion of any other integer or group of integers.

## Claims

1. A computer-implemented method for creating a tamper proof record chain of a transaction comprising a number of transaction milestones, wherein the milestones represent key steps of the transaction, the method being executed at a server (250) and comprising the steps of:
for each transaction milestone:
creating a record entry (102, 104, 106, 108) including:
receiving a data message associated with the milestone that includes at least part of a term of the transaction or an identifier of a party to the transaction,
receiving a timestamp and associating it with the milestone,
obtaining a value that provides a link to an immediately preceding and/or following record entry (102, 104, 106, 108), if any, and
writing the data message, timestamp and link value to the record entry (102, 104, 106, 108); and
writing the record entry (102, 104, 106, 108) to a tamper proof storage (110) configured to disable modification of the record entry after completion of the write operation,
wherein a series of data messages of the linked record entries in the tamper proof storage (110) includes at least an identifier of each party to the transaction and represents the record chain for the transaction,
wherein at least one of the transaction milestones represents the creation of an unsigned document associated with the transaction, and the method includes applying an electronic signature of each of the parties to the unsigned document,
and wherein the applying of the electronic signature of a party is preceded by and subject to successful biometric authentication of the party.

2. The method as claimed in claim 1 wherein the value providing a link to the immediately preceding and/or following record entry is formed by a cryptographic hash value of the preceding or following record entry.

3. The method as claimed in either claim 1 or claim 2 wherein at least one of the data messages associated with a milestone includes data associated with the document that is associated with the transaction.

4. The method as claimed in claim 3 wherein the data associated with the document is an identifier of the unsigned document.

5. The method as claimed in claim 4 including retrieving the unsigned document using the document.

6. The method as claimed in claim 1 wherein the identifiers of the parties to the transaction are used to obtain the electronic signature for each respective party.

7. The method as claimed in claim 1 wherein at least one of the milestones represents the applying of the electronic signatures to the unsigned document.

8. The method as claimed in claim 1wherein the electronic signature of each party includes a timestamp associated with a milestone at which the identifier of the relevant party was received.

9. The method as claimed in any one of the previous claims wherein the identifier of at least one of the parties to the transaction is derived from a biometric of the respective party.

10. The method as claimed in any one of the previous claims wherein the electronic signature includes an image of a biometric of the party.

11. The method as claimed in any one of the previous claims wherein the authentication of the party represents a milestone and wherein the timestamp included in the signature corresponds to a time at which the biometrics of the party was successfully authenticated, the timestamp having been received in the data message subsequent to the authentication.

12. The method as claimed in any one of the previous claims wherein writing the record entry to the tamper proof storage is preceded by writing the record entry to temporary storage and causing the record entry to be written to the tamper proof storage in response to the occurrence of a future event.

13. The method as claimed in claim 12 wherein the future event is selected from the group consisting of: the completion of the record chain, the elapsing of a specified period of non-activity on the record chain after the creation of a latest record entry, and an accumulation of a predetermined number of record entries in the temporary storage.

14. The method as claimed in claim 12 or claim 13 wherein the temporary storage is an online storage.

15. The method as claimed in claim 14 wherein the record entries remain in the online storage after being written to the tamper proof storage, the record entries in the online storage being usable as an index to the record entries in the tamper proof storage.

16. The method as claimed in claim 15 wherein an index to the record entries that have been written to the tamper proof storage remain in the online storage after the record entries are written to the tamper proof storage.

17. The method as claimed in any one of the previous claims wherein the timestamp includes a data hash derived from the data message associated with the relevant milestone.

18. The method as claimed in any one of the previous claims wherein the timestamp includes a timestamp hash derived from the combination of the timestamp and data hash.

19. The method as claimed in claim 18 wherein either or both of the timestamp and timestamp hash are digitally signed with an encryption key associated with a trusted third party.

20. The method as claimed in any one of the previous claims wherein the timestamp received at each milestone is provided by a trusted third party.

21. A system (200) for creating a tamper proof record chain of a transaction comprising a number of transaction milestones, wherein the milestones represent key steps of the transaction, the system (200) including a memory (404) for storing computer-readable program code and a processor (402) for executing the computer-readable program code, the system (200) including a server (250) comprising:
a data message receiving component arranged to receive a data message associated with a milestone that includes at least part of a term of the transaction or an identifier of a party to the transaction,
a timestamp receiving component (430) arranged to receive a timestamp associated with the relevant milestone,
a link value obtaining component (425) arranged to obtain a value that provides a link to an immediately preceding and/or following record entry,
a document generation component (406) arranged to generate a document associated with the transaction,
an electronic document management component (432) arranged to retrieve an unsigned document created by the document generation component (406) using an identifier of the document included in a data message received by the data message receiving component (430),
a biometrics component (414) arranged to obtain biometric data of a party,
an electronic signature (eSignature) component arranged to obtain an electronic signature for each party using the identifiers of the parties, the eSignature component being arranged to apply the electronic signatures to the unsigned document,
a record entry creating component (421) arranged to create for each transaction milestone, a record entry including the data message, timestamp, link value, and the unsigned or signed document, and
a record entry writing component (423) arranged to write the record entry to a tamper proof storage (110) configured to disable modification of the record entry after completion of the write operation,
wherein a series of data messages of the linked record entries in the tamper proof storage (110) includes at least an identifier of each party to the transaction and represents the record chain for the transaction.

22. The system as claimed in claim 21 wherein the link value obtaining component is included in a cryptography component and wherein the link obtaining component is arranged to form a link to the immediately preceding and/or following record entry with a cryptographic hash of the preceding or following record entry, the cryptographic hash being obtained by the cryptography component.

23. The system as claimed in claim 21 or 22 including a tamper proof storage access component arranged to cause a record entry to be written to the tamper proof storage, and causing a record entry to be read from the tamper proof storage.

24. The system as claimed in any one of claims 21 to 23 wherein the biometrics component is arranged to derive the identifier of the party from the biometric data of the party.

25. The system as claimed in any one of claims 21 to 24 wherein the timestamp obtaining component is included in a trusted timestamp authority (TSA) access component, the TSA access component being adapted to request and receive timestamps from a trusted timestamp authority (TSA).

26. The system as claimed in any one of claims 21 to 25 including a temporary storage access component arranged to cause a record entry to be written to temporary storage.

27. The system as claimed in claim 26 wherein the temporary storage is an online storage.

28. The system as claimed in any one of claims 21 to 27 including a database component, the database component including: a document storage database for storing electronic documents; a user configuration database for storing identifiers of the parties; a biometrics storage database for storing biometric data of the parties; and a key storage database for storing cryptographic keys for use by the remote server.

29. A computer program product for creating a tamper proof record chain of a transaction comprising a number of transaction milestones, wherein the milestones represent key steps of the transaction, the computer program product comprising a computer-readable medium having stored computer-readable program instructions which, when executed by a computer, cause the computer to carry out the steps of: for each transaction milestone:
creating a record entry (102, 104, 106, 108), including:
receiving a data message associated with the relevant milestone that includes at least part of a term of the transaction or an identifier of a party to the transaction,
receiving a timestamp associated with the milestone,
obtaining a value that provides a link to an immediately preceding and/or following record entry (102, 104, 106, 108), if any, and
writing the data message, timestamp and link value to the record entry (102, 104, 106, 108); and
writing the audit entries (102, 104, 106, 108) to a tamper proof storage (110) configured to disable modification of the audit entry after completion of the write operation,
wherein a series of linked data messages in the tamper proof storage (110) includes at least an identifier of each party to the transaction and represents the audit trail (100) of the transaction,
wherein at least one of the transaction milestones represents the creation of an unsigned document associated with the transaction, and the method includes applying an electronic signature of each of the parties to the unsigned document,
and wherein the applying of the electronic signature of a party is preceded by and subject to successful biometric authentication of the party.

## Patentansprüche

1. Computerimplementiertes Verfahren zum Erzeugen einer manipulationssicheren Aufzeichnungskette einer Transaktion, umfassend einer Anzahl von Transaktionsmeilensteinen, wobei die Meilensteine wichtige Schritte der Transaktion darstellen, wobei das Verfahren an einem Server (250) ausgeführt wird und die folgenden Schritte umfasst:
für jeden Transaktionsmeilenstein:
Erzeugen eines Aufzeichnungseintrags (102, 104, 106, 108), einschließlich:
Empfangen einer Datennachricht, die dem Meilenstein zugeordnet ist, der zumindest einen Teil von Vertragsbedingungen der Transaktion oder einen Identifikator einer Partei der Transaktion umfasst,
Empfangen eines Zeitstempels und Zuordnen desselben zu dem Meilenstein,
Erhalten eines Werts, der eine Verknüpfung mit einem unmittelbar vorangegangenen und/oder nachfolgenden Aufzeichnungseintrag (102, 104, 106, 108), falls vorhanden, bereitstellt und
Schreiben der Datennachricht, des Zeitstempels und des Verknüpfungswerts in den Aufzeichnungseintrag (102, 104, 106, 108); und
Schreiben des Aufzeichnungseintrags (102, 104, 106, 108) in einen manipulationssicheren Speicher (110), der ausgelegt ist, um eine Modifikation des Aufzeichnungseintrags nach Abschluss des Schreibvorgangs zu deaktivieren,
wobei eine Reihe von Datennachrichten der verknüpften Aufzeichnungseinträge in dem manipulationssicheren Speicher (110) zumindest einen Identifikator jeder Partei der Transaktion umfasst und die Aufzeichnungskette für die Transaktion darstellt,
wobei zumindest einer der Transaktionsmeilensteine das Erstellen eines nicht unterzeichneten Dokuments darstellt, das der Transaktion zugeordnet ist, und wobei das Verfahren das Anwenden einer elektronischen Signatur jeder der Parteien auf das nicht unterzeichnete Dokument umfasst,
und wobei dem Anwenden der elektronischen Signatur einer Partei eine erfolgreiche biometrische Authentifizierung der Partei vorausgeht und es dieser unterliegt.

2. Verfahren nach Anspruch 1, wobei der Wert, der eine Verknüpfung mit dem unmittelbar vorangegangenen und/oder nachfolgenden Aufzeichnungseintrag bereitstellt, durch einen kryptografischen Hash-Wert des vorangegangenen oder nachfolgenden Aufzeichnungseintrags gebildet wird.

3. Verfahren nach Anspruch 1 oder Anspruch 2, wobei zumindest eine der Datennachrichten, die einem Meilenstein zugeordnet ist, Daten umfasst, die dem Dokument zugeordnet sind, das der Transaktion zugeordnet ist.

4. Verfahren nach Anspruch 3, wobei die Daten, die dem Dokument zugeordnet sind, ein Identifikator des nicht unterzeichneten Dokuments sind.

5. Verfahren nach Anspruch 4, einschließlich des Abrufens des nicht unterzeichneten Dokuments unter Verwendung des Dokuments.

6. Verfahren nach Anspruch 1, wobei die Identifikatoren der Parteien der Transaktion verwendet werden, um die elektronische Signatur für jede jeweilige Partei zu erhalten.

7. Verfahren nach Anspruch 1, wobei zumindest einer der Meilensteine das Anwenden der elektronischen Signaturen auf das nicht unterzeichnete Dokument darstellt.

8. Verfahren nach Anspruch 1, wobei die elektronische Signatur jeder Partei einen Zeitstempel umfasst, der einem Meilenstein zugeordnet ist, an dem der Identifikator der betreffenden Partei empfangen wurde.

9. Verfahren nach einem der vorangegangenen Ansprüche, wobei der Identifikator zumindest einer der Parteien der Transaktion von einer Biometrik der entsprechenden Partei abgeleitet ist.

10. Verfahren nach einem der vorangegangenen Ansprüche, wobei die elektronische Signatur ein Bild einer Biometrik der Partei umfasst.

11. Verfahren nach einem der vorangegangenen Ansprüche, wobei die Authentifizierung der Partei einen Meilenstein darstellt und wobei der Zeitstempel, der in der Signatur enthalten ist, einem Zeitpunkt entspricht, zu dem die Biometrik der Partei erfolgreich authentifiziert wurde, wobei der Zeitstempel nach der Authentifizierung in der Datennachricht empfangen wurde.

12. Verfahren nach einem der vorangegangenen Ansprüche, wobei dem Schreiben des Aufzeichnungseintrags in den manipulationssicheren Speicher ein Schreiben des Aufzeichnungseintrags in einen temporären Speicher und ein Bewirken, dass der Aufzeichnungseintrag als Reaktion auf das Eintreten eines zukünftigen Ereignisses in den manipulationssicheren Speicher geschrieben wird, vorangehen.

13. Verfahren nach Anspruch 12, wobei das zukünftige Ereignis aus der aus Folgenden bestehenden Gruppe ausgewählt ist: der Fertigstellung der Aufzeichnungskette, dem Verstreichen eines angegebenen Zeitraums der Inaktivität der Aufzeichnungskette nach der Erstellung eines letzten Aufzeichnungseintrags und einer Anhäufung einer vorbestimmten Anzahl von Aufzeichnungseinträgen in dem temporären Speicher.

14. Verfahren nach Anspruch 12 oder 13, wobei der temporäre Speicher ein Online-Speicher ist.

15. Verfahren nach Anspruch 14, wobei die Aufzeichnungseinträge in dem Online-Speicher bleiben, nachdem sie in den manipulationssicheren Speicher geschrieben wurden, wobei die Aufzeichnungseinträge in dem Online-Speicher als ein Index für die Aufzeichnungseinträge in dem manipulationssicheren Speicher verwendbar sind.

16. Verfahren nach Anspruch 15, wobei ein Index für die Aufzeichnungseinträge, die in den manipulationssicheren Speicher geschrieben wurden, in dem Online-Speicher bleiben, nachdem die Aufzeichnungseinträge in den manipulationssicheren Speicher geschrieben wurden.

17. Verfahren nach einem der vorangegangenen Ansprüche, wobei der Zeitstempel einen Daten-Hash umfasst, der von der Datennachricht abgeleitet ist, die dem betreffenden Meilenstein zugeordnet ist.

18. Verfahren nach einem der vorangegangenen Ansprüche, wobei der Zeitstempel einen Zeitstempel-Hash umfasst, der von der Kombination aus dem Zeitstempel und dem Daten-Hash abgeleitet ist.

19. Verfahren nach Anspruch 18, wobei einer oder beide aus dem Zeitstempel und dem Zeitstempel-Hash digital mit einem Verschlüsselungsschlüssel signiert werden, der einer vertrauenswürdigen Drittpartei zugeordnet ist.

20. Verfahren nach einem der vorangegangenen Ansprüche, wobei der Zeitstempel, der an jedem Meilenstein empfangen wird, durch eine vertrauenswürdige Drittpartei bereitgestellt wird.

21. System (200) zum Erzeugen einer manipulationssicheren Aufzeichnungskette einer Transaktion, umfassend eine Anzahl von Transaktionsmeilensteinen, wobei die Meilensteine wichtige Schritte der Transaktion darstellen, wobei das System (200) einen Speicher (404) zum Speichern von computerlesbarem Programmcode und einen Prozessor (402) zum Ausführen des computerlesbaren Programmcodes umfasst, wobei das System (200) einen Server (250) umfasst, der Folgendes umfasst:
eine Datennachrichtempfangskomponente, die angeordnet ist, um eine Datennachricht zu empfangen, die einem Meilenstein zugeordnet ist, der zumindest einen Teil von Vertragsbedingungen der Transaktion oder einen Identifikator einer Partei der Transaktion umfasst,
eine Zeitstempelempfangskomponente (430), die angeordnet ist, um einen Zeitstempel zu empfangen, der dem betreffenden Meilenstein zugeordnet ist,
eine Verknüpfungswerterhaltungskomponente (425), die angeordnet ist, um einen Wert zu erhalten, der eine Verknüpfung mit einem unmittelbar vorangegangenen und/oder nachfolgenden Aufzeichnungseintrag bereitstellt,
eine Dokumenterstellungskomponente (406), die ausgelegt ist, um ein Dokument zu erstellen, das der Transaktion zugeordnet ist,
eine Elektronisches-Dokument-Verwaltungskomponente (432), die angeordnet ist, um ein nicht unterzeichnetes Dokument, das durch die Dokumenterstellungskomponente (406) erstellt wurde, unter Verwendung eines Identifikators des Dokuments, der in einer Datennachricht enthalten ist, die durch die Datennachrichtempfangskomponente (430) empfangen wird, abzurufen,
eine Biometrikkomponente (414), die angeordnet ist, um biometrische Daten einer Partei zu erhalten,
eine Elektronische-Signatur(eSignatur)-Komponente, die angeordnet ist, um eine elektronische Signatur für jede Partei unter Verwendung der Identifikatoren der Parteien zu erhalten, wobei die eSignatur-Komponente angeordnet ist, um die elektronischen Signaturen auf das nicht unterzeichnete Dokument anzuwenden,
eine Aufzeichnungseintragerzeugungskomponente (421), die angeordnet ist, um für jeden Transaktionsmeilenstein einen Aufzeichnungseintrag, einschließlich der Datennachricht, des Zeitstempels, des Verknüpfungswerts und des nicht unterzeichneten oder unterzeichneten Dokuments, zu erzeugen und
eine Aufzeichnungseintragsschreibkomponente (423), die angeordnet ist, um den Aufzeichnungseintrag in einen manipulationssicheren Speicher (110) zu schreiben, der ausgelegt ist, um die Modifikation des Aufzeichnungseintrags nach Abschluss des Schreibvorgangs zu deaktivieren,
wobei eine Reihe von Datennachrichten der verknüpften Aufzeichnungseinträge in dem manipulationssicheren Speicher (110) zumindest einen Identifikator jeder Partei der Transaktion umfasst und die Aufzeichnungskette für die Transaktion darstellt.

22. System nach Anspruch 21, wobei die Verknüpfungswerterhaltungskomponente in einer Kryptografiekomponente enthalten ist und wobei die Verknüpfungswerthaltungskomponente angeordnet ist, um eine Verknüpfung mit dem unmittelbar vorangegangenen und/oder nachfolgenden Aufzeichnungseintrag mit einem kryptografischen Hash des vorangegangenen oder nachfolgenden Aufzeichnungseintrags zu bilden, wobei der kryptografische Hash durch die Kryptografiekomponente erhalten wird.

23. System nach Anspruch 21 oder 22, einschließlich einer Zugriffskomponente eines manipulationssicheren Speichers, die angeordnet ist, um zu bewirken, dass ein Aufzeichnungseintrag in den manipulationssicheren Speicher geschrieben wird und um zu bewirken, dass ein Aufzeichnungseintrag aus dem manipulationssicheren Speicher gelesen wird.

24. System nach einem der Ansprüche 21 bis 23, wobei die Biometrikkomponente angeordnet ist, um den Identifikator der Partei von den biometrischen Daten der Partei abzuleiten.

25. System nach einem der Ansprüche 21 bis 24, wobei die Zeitstempelerhaltungskomponente in einer vertrauenswürdigen Zeitstempelautoritäts(TSA)-Zugriffskomponente enthalten ist, wobei die TSA-Zugriffskomponente ausgelegt ist, um Zeitstempel von einer vertrauenswürdigen Zeitstempelautorität (TSA) anzufragen und zu erhalten.

26. System nach einem der Ansprüche 21 bis 25, einschließlich einer Zugriffskomponente eines temporären Speichers, die angeordnet ist, um zu bewirken, dass ein Aufzeichnungseintrag in den temporären Speicher geschrieben wird.

27. System nach Anspruch 26, wobei der temporäre Speicher ein Online-Speicher ist.

28. System nach einem der Ansprüche 21 bis 27, einschließlich einer Datenbankkomponente, wobei die Datenbankkomponente Folgendes umfasst: eine Dokumentspeicherdatenbank zum Speichern von elektronischen Dokumenten; eine Benutzerkonfigurationsdatenbank zum Speichern von Identifikatoren der Parteien; eine Biometrikspeicherdatenbank zum Speichern von biometrischen Daten der Parteien; und eine Schlüsselspeicherdatenbank zum Speichern kryptografischer Schlüssel zur Verwendung durch den entfernten Server.

29. Computerprogrammprodukt zum Erzeugen einer manipulationssicheren Aufzeichnungskette einer Transaktion, umfassend eine Anzahl von Transaktionsmeilensteinen, wobei die Meilensteine wichtige Schritte der Transaktion darstellen, wobei das Computerprogrammprodukt ein computerlesbares Medium umfasst, das gespeicherte computerlesbare Programmbefehle aufweist, die, wenn sie durch einen Computer ausgeführt werden, bewirken, dass der Computer die folgenden Schritte ausführt:
für jeden Transaktionsmeilenstein:
Erstellen eines Aufzeichnungseintrags (102, 104, 106, 108), einschließlich:
Empfangen einer Datennachricht, die dem Meilenstein zugeordnet ist, der zumindest einen Teil von Vertragsbedingungen der Transaktion oder einen Identifikator einer Partei der Transaktion umfasst,
Empfangen eines Zeitstempels, der dem Meilenstein zugeordnet ist,
Erhalten eines Werts, der eine Verknüpfung mit einem unmittelbar vorangegangenen und/oder nachfolgenden Aufzeichnungseintrag (102, 104, 106, 108), falls vorhanden, bereitstellt und
Schreiben der Datennachricht, des Zeitstempels und des Verknüpfungswerts in den Aufzeichnungseintrag (102, 104, 106, 108); und
Schreiben der Aufzeichnungseinträge (102, 104, 106, 108) in einen manipulationssicheren Speicher (110), der ausgelegt ist, um eine Modifikation des Aufzeichnungseintrags nach Abschluss des Schreibvorgangs zu deaktivieren,
wobei eine Reihe von verknüpften Datennachrichten in dem manipulationssicheren Speicher (110) zumindest einen Identifikator jeder Partei der Transaktion umfasst und das Audit-Protokoll (100) für die Transaktion darstellt,
wobei zumindest einer der Transaktionsmeilensteine das Erstellen eines nicht unterzeichneten Dokuments darstellt, das der Transaktion zugeordnet ist, und wobei das Verfahren das Anwenden einer elektronischen Signatur jeder der Parteien auf das nicht unterzeichnete Dokument umfasst,
und wobei dem Anwenden der elektronischen Signatur einer Partei eine erfolgreiche biometrische Authentifizierung der Partei vorausgeht und es dieser unterliegt.

## Revendications

1. Procédé implémenté par ordinateur pour créer une chaîne d'enregistrements inviolable d'une transaction comprenant un certain nombre de jalons de transaction, dans lequel les jalons représentent des étapes clés de la transaction, le procédé étant exécuté au niveau d'un serveur (250) et comprenant les étapes consistant à :
pour chaque jalon de transaction :
créer une entrée d'enregistrement (102, 104, 106, 108), incluant les étapes consistant à :
recevoir un message de données associé au jalon qui inclut au moins une partie d'un terme de la transaction ou un identifiant d'une partie à la transaction,
recevoir une estampille temporelle et l'associer au jalon,
obtenir une valeur qui fournit une liaison à une entrée d'enregistrement immédiatement précédente et/ou suivante (102, 104, 106, 108), le cas échéant, et
écrire le message de données, l'estampille temporelle et la valeur de liaison dans l'entrée d'enregistrement (102, 104, 106, 108) ; et
écrire l'entrée d'enregistrement (102, 104, 106, 108) dans un stockage inviolable (110) configuré pour désactiver une modification de l'entrée d'enregistrement après l'achèvement de l'opération d'écriture,
dans lequel une série de messages de données des entrées d'enregistrement liées dans le stockage inviolable (110) inclut au moins un identifiant de chaque partie à la transaction et représente la chaîne d'enregistrements pour la transaction,
dans lequel au moins un certain des jalons de transaction représente la création d'un document non signé associé à la transaction, et le procédé inclut l'étape consistant à appliquer une signature électronique de chacune des parties au document non signé, et
dans lequel l'application de la signature électronique d'une partie est précédée d'une authentification biométrique réussie de la partie, et soumise à celle-ci.

2. Procédé selon la revendication 1, dans lequel la valeur fournissant une liaison à l'entrée d'enregistrement immédiatement précédente et/ou suivante est formée par une valeur de hachage cryptographique de l'entrée d'enregistrement précédente ou suivante.

3. Procédé selon la revendication 1 ou la revendication 2, dans lequel au moins un des messages de données associés à un jalon inclut des données associées au document qui est associé à la transaction.

4. Procédé selon la revendication 3, dans lequel les données associées au document sont un identifiant du document non signé.

5. Procédé selon la revendication 4, incluant l'étape consistant à récupérer le document non signé en utilisant le document.

6. Procédé selon la revendication 1, dans lequel les identifiants des parties à la transaction sont utilisés pour obtenir la signature électronique pour chaque partie respective.

7. Procédé selon la revendication 1, dans lequel au moins un certain des jalons représente l'application des signatures électroniques au document non signé.

8. Procédé selon la revendication 1, dans lequel la signature électronique de chaque partie inclut une estampille temporelle associée à un jalon au niveau duquel l'identifiant de la partie pertinente a été reçu.

9. Procédé selon l'une quelconque des revendications précédentes, dans lequel l'identifiant d'au moins une certaine des parties à la transaction est dérivé d'un élément biométrique de la partie respective.

10. Procédé selon l'une quelconque des revendications précédentes, dans lequel la signature électronique inclut une image d'un élément biométrique de la partie.

11. Procédé selon l'une quelconque des revendications précédentes, dans lequel l'authentification de la partie représente un jalon et dans lequel l'estampille temporelle incluse dans la signature correspond à un temps auquel les éléments biométriques de la partie ont été authentifiés avec succès, l'estampille temporelle ayant été reçue dans le message de données après l'authentification.

12. Procédé selon l'une quelconque des revendications précédentes, dans lequel l'écriture de l'entrée d'enregistrement dans le stockage inviolable est précédée par l'écriture de l'entrée d'enregistrement dans un stockage temporaire et par l'étape consistant à amener l'entrée d'enregistrement à être écrite dans le stockage inviolable en réponse à la survenue d'un événement futur.

13. Procédé selon la revendication 12, dans lequel l'événement futur est sélectionné dans le groupe constitué de : l'achèvement de la chaîne d'enregistrements, l'écoulement d'une période spécifiée de non-activité sur la chaîne d'enregistrements après la création d'une dernière entrée d'enregistrement, et une accumulation d'un nombre prédéterminé d'entrées d'enregistrement dans le stockage temporaire.

14. Procédé selon la revendication 12 ou la revendication 13, dans lequel le stockage temporaire est un stockage en ligne.

15. Procédé selon la revendication 14, dans lequel les entrées d'enregistrement restent dans le stockage en ligne après avoir été écrites dans le stockage inviolable, les entrées d'enregistrement dans le stockage en ligne pouvant être utilisées comme index des entrées d'enregistrement dans le stockage inviolable.

16. Procédé selon la revendication 15, dans lequel un index des entrées d'enregistrement qui ont été écrites dans le stockage inviolable reste dans le stockage en ligne après que les entrées d'enregistrement aient été écrites dans le stockage inviolable.

17. Procédé selon l'une quelconque des revendications précédentes, dans lequel l'estampille temporelle inclut un hachage de données dérivé du message de données associé au jalon pertinent.

18. Procédé selon l'une quelconque des revendications précédentes, dans lequel l'estampille temporelle inclut un hachage d'estampille temporelle dérivé de la combinaison de l'estampille temporelle et du hachage de données.

19. Procédé selon la revendication 18, dans lequel l'estampille temporelle et/ou le hachage d'estampille temporelle sont signés numériquement avec une clé de chiffrement associée à un tiers de confiance.

20. Procédé selon l'une quelconque des revendications précédentes, dans lequel l'estampille temporelle reçue au niveau de chaque jalon est fournie par un tiers de confiance.

21. Système (200) pour créer une chaîne d'enregistrements inviolable d'une transaction comprenant un certain nombre de jalons de transaction, dans lequel les jalons représentent des étapes clés de la transaction, le système (200) comprenant une mémoire (404) pour stocker un code de programme lisible par ordinateur et un processeur (402) pour exécuter le code de programme lisible par ordinateur, le système (200) comprenant un serveur (250) comprenant :
un composant de réception de message de données agencé pour recevoir un message de données associé à un jalon qui inclut au moins une partie d'un terme de la transaction ou un identifiant d'une partie à la transaction,
un composant de réception d'estampille temporelle (430) agencé pour recevoir une estampille temporelle associée au jalon pertinent,
un composant d'obtention de valeur de liaison (425) agencé pour obtenir une valeur qui fournit une liaison à une entrée d'enregistrement immédiatement précédente et/ou suivante,
un composant de génération de document (406) agencé pour générer un document associé à la transaction,
un composant de gestion de documents électroniques (432) agencé pour récupérer un document non signé créé par le composant de génération de document (406) en utilisant un identifiant du document inclus dans un message de données reçu par le composant de réception de message de données (430),
un composant biométrique (414) agencé pour obtenir des données biométriques d'une partie,
un composant de signature électronique (eSignature) agencé pour obtenir une signature électronique pour chaque partie en utilisant les identifiants des parties, le composant de signature électronique étant agencé pour appliquer les signatures électroniques au document non signé,
un composant de création d'entrée d'enregistrement (421) agencé pour créer, pour chaque jalon de transaction, une entrée d'enregistrement incluant le message de données, l'estampille temporelle, la valeur de liaison et le document non signé ou signé, et
un composant d'écriture d'entrée d'enregistrement (423) agencé pour écrire l'entrée d'enregistrement dans un stockage inviolable (110) configuré pour désactiver une modification de l'entrée d'enregistrement après l'achèvement de l'opération d'écriture,
dans lequel une série de messages de données des entrées d'enregistrement liées dans le stockage inviolable (110) inclut au moins un identifiant de chaque partie à la transaction et représente la chaîne d'enregistrements pour la transaction.

22. Système selon la revendication 21, dans lequel le composant d'obtention de valeur de liaison est inclus dans un composant de cryptographie et dans lequel le composant d'obtention de liaison est agencé pour former une liaison à l'entrée d'enregistrement immédiatement précédente et/ou suivante avec un hachage cryptographique de l'entrée d'enregistrement précédente ou suivante, le hachage cryptographique étant obtenu par le composant de cryptographie.

23. Système selon la revendication 21 ou 22, incluant un composant d'accès au stockage inviolable agencé pour amener une entrée d'enregistrement à être écrite dans le stockage inviolable, et amener une entrée d'enregistrement à être lue à partir du stockage inviolable.

24. Système selon l'une quelconque des revendications 21 à 23, dans lequel le composant biométrique est agencé pour dériver l'identifiant de la partie à partir des données biométriques de la partie.

25. Système selon l'une quelconque des revendications 21 à 24, dans lequel le composant d'obtention d'estampille temporelle est inclus dans un composant d'accès d'autorité d'estampille temporelle de confiance (TSA), le composant d'accès TSA étant adapté pour demander et recevoir des estampilles temporelles d'une autorité d'estampille temporelle de confiance (TSA).

26. Système selon l'une quelconque des revendications 21 à 25, incluant un composant d'accès au stockage temporaire agencé pour amener une entrée d'enregistrement à être écrite dans le stockage temporaire.

27. Système selon la revendication 26, dans lequel le stockage temporaire est un stockage en ligne.

28. Système selon l'une quelconque des revendications 21 à 27, incluant un composant de base de données, le composant de base de données incluant : une base de données de stockage de documents pour stocker des documents électroniques ; une base de données de configuration d'utilisateur pour stocker des identifiants des parties ; une base de données de stockage biométrique pour stocker des données biométriques des parties ; et une base de données de stockage de clés pour stocker des clés cryptographiques à utiliser par le serveur distant.

29. Produit de programme informatique pour créer une chaîne d'enregistrements inviolable d'une transaction comprenant un certain nombre de jalons de transaction, dans lequel les jalons représentent des étapes clés de la transaction, le produit de programme informatique comprenant un support lisible par ordinateur ayant des instructions de programme lisibles par ordinateur stockées qui, lorsqu'elles sont exécutées par un ordinateur, amènent l'ordinateur à exécuter les étapes consistant à :
pour chaque jalon de transaction :
créer une entrée d'enregistrement (102, 104, 106, 108), incluant les étapes consistant à :
recevoir un message de données associé au jalon pertinent qui inclut au moins une partie d'un terme de la transaction ou un identifiant d'une partie à la transaction,
recevoir une estampille temporelle associée au jalon,
obtenir une valeur qui fournit une liaison à une entrée d'enregistrement immédiatement précédente et/ou suivante (102, 104, 106, 108), le cas échéant, et
écrire le message de données, l'estampille temporelle et la valeur de liaison dans l'entrée d'enregistrement (102, 104, 106, 108) ; et
écrire les entrées d'audit (102, 104, 106, 108) dans un stockage inviolable (110) configuré pour désactiver une modification de l'entrée d'audit après l'achèvement de l'opération d'écriture,
dans lequel une série de messages de données liés dans le stockage inviolable (110) inclut au moins un identifiant de chaque partie à la transaction et représente la piste d'audit (100) de la transaction,
dans lequel au moins un certain des jalons de transaction représente la création d'un document non signé associé à la transaction, et le procédé inclut l'étape consistant à appliquer une signature électronique de chacune des parties au document non signé, et
dans lequel l'application de la signature électronique d'une partie est précédée d'une authentification biométrique réussie de la partie, et soumise à celle-ci.
